# EUROPEAN PATENT SPECIFICATION

(11) **EP 0 361 454 B1**
(45) Date of publication and mention of the grant of the patent: **24.11.1993**
(21) Application number: 89117889.9
(22) Date of filing: 27.09.1989
(51) Int. Cl.: G11B 7/00

(54) **Data storage device**
Datenspeichervorrichtung
Dispositif d'emmagasinage de données

(30) Priority: 30.09.1988 JP 246107/88
(43) Date of publication of application: 04.04.1990
(73) Proprietor: KABUSHIKI KAISHA TOSHIBA, Kawasaki-shi, Kanagawa-ken 210 (JP)
(72) Inventor: Kamiyama, Tadanobu Intellectual Property Div., Minato-ku Tokyo 105 (JP); Yoda, Nobuhisa Intellectual Property Div., Minato-ku Tokyo 105 (JP); Takagi, Shiro Intellectual Property Div., Minato-ku Tokyo 105 (JP); Ogaki, Takeshi Intellectual Property Div., Minato-ku Tokyo 105 (JP); Izawa, Koji Intellectual Property Div., Minato-ku Tokyo 105 (JP)
(74) Representative: Henkel, Feiler, Hänzel & Partner

(56) References cited:
- EP-A- 0 051 305
- EP-A- 0 110 676
- EP-A- 0 282 997
- EP-A- 0 315 752
- DE-A- 3 341 418
- US-A- 4 555 803

## Description

The present invention relates to a data storage device for use in an electronic filing apparatus for managing, storing, and processing data by using an optical disk.

Recently, data used in an office includes, in addition to picture data of a document or drawing recorded on paper, document data constituted by character code data formed by a wordprocessor, graphic data constituted by bit code data formed by a personal computer, graphic data constituted by vector code data formed by a computer aided design (CAD), and the like. The document data formed by a wordprocessor and the graphic data formed by a personal computer or a CAD are stored in a plurality of floppy disks as a magnetic storage medium. However, since the number of various mediums storing graphic data or document data is increased, disks overflow on a desk.

Therefore, an electronic filing apparatus is already in commercial use in which a large number of picture data of documents and drawings are read by a two-dimensional scanning unit such as a scanner, the read picture data are stored in optical disks, and an arbitrary one of the stored picture data is searched and read out from an optical disk.

In recent years, in such an electronic filing apparatus, not only picture data read by a scanner but also code data such as document data or graphic data stored in a floppy disk are stored as code data. However, when code data stored in a floppy disk is to be stored in an optical disk, no available apparatus can process the code data by using the same management system as for picture data. Therefore, when document data or graphic data stored in a floppy disk is to be stored in an optical disk, a system is generally selected in accordance with the type of medium to be processed, resulting in cumbersome processing and a poor efficiency.

Therefore, an electronic filing apparatus capable of processing and managing document data or graphic data stored in a floppy disk like drawings on paper is proposed (Japanese Patent Application No. 62-230020).

In the above apparatus, in order to manage and register all of picture data, code data, and the like, various magnetic recording mediums must be processed, and various titles or key words must be added to the respective picture and code data accordingly. As a result, a registering operation becomes very cumbersome to require many labors and consume a long time.

Therefore, when data from various magnetic storage mediums and a scanner are to be registered, a registering operation becomes cumbersome to result in a poor working efficiency.

Prior art document EP-A-0 282 997 discloses an electric file apparatus capable of storing code data into an optical disk. In this apparatus, image data to be processed as retrieved data associated with retrieval data, is supplied by a scanner. The code data to be processed as the retrieved data associated with the retrieval data, is supplied from a magnetic disk via a magnetic disk device. Decision is made if the retrieved data supplied from the scanner and the magnetic disk is code data or image data. A keyboard or a pointing device is used to designate the type of the supplied data, the image data or the code data. Upon designation of the data type, a CPU stores the code data and the image data into predetermined memory areas in the optical disk via an optical disk device. In other words, in this known apparatus image data and code data can be stored in different allocated memory areas of a single optical disk.

It is an object of the present invention to provide a data storage device capable of performing a simple registering operation and improving a working efficiency in registration when data are to be registered from various magnetic storage mediums and a reading unit.

To solve this object the present invention provides a data storage device as specified in claim 1.

This invention can be more fully understood from the following detailed description when taken in conjunction with the accompanying drawings, in which:
Fig. 1 is a block diagram schematically showing an overall arrangement;
Fig. 2 is a block diagram showing a structure of software;
Fig. 3 is a block diagram showing a schematic arrangement of a filing processing module;
Figs. 4A and 4B are views showing command lists;
Fig. 5 is a block diagram showing a schematic arrangement of a PDF interpretive processing module;
Fig. 6 shows a document management system;
Figs. 7, 8, 16, 18, 19, and 24 are views showing formats of a batch registration procedure file;
Figs. 9, 10, 11, 12, 13, 17, 20, 21, and 31 are views showing displays in registration processing;
Figs. 14A, 14B, 14C, and 14D are views showing displays on a function key section in the registration processing;
Figs. 15, 23A, 23B, 23C and 23D are flow charts for explaining the registration processing;
Fig. 22 is a view showing a protocol between the filing processing module and the PDF interpretive processing module;
Fig. 25 is a view showing a TDF internally managed by the filing processing module;
Fig. 26 is a view showing stored contents of an internal table associated with PDF processing managed by a system flow management submodule;
Fig. 27 is a flow chart for explaining an operation of the system flow management submodule;
Fig. 28 is a view showing data to be loaded to a buffer memory; and
Figs. 29 and 30 are flow charts for explaining registration processing for an optical disk.

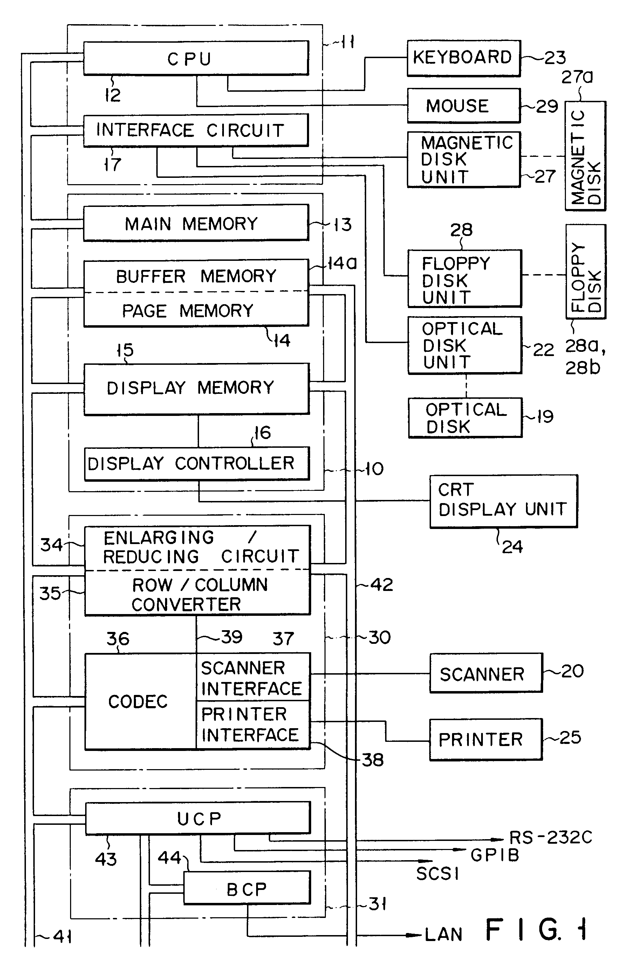

Fig. 1 shows hardware of a data device such as hardware of an electronic filing apparatus.

That is, the electronic filing apparatus comprises a control module 11, a memory module 10, a picture processing module 30, a communication control module 31, a scanner 20 as a supply means, an optical disk unit 22, a keyboard 23, a CRT display unit 24, a printer 25, a magnetic disk unit 27, a floppy disk unit 28, a mouse 29, a system bus 41, and a picture bus 42.

The control module 11 comprises a CPU 12 as a central processing unit for performing various control operations, and an interface circuit 17 for connecting the optical disk unit 22, the magnetic disk unit 27, and the floppy disk unit 28 to the CPU 12. The keyboard 23 and the mouse 29 are connected to the CPU 12.

The memory module 10 comprises a main memory 13, a page memory 14 as a picture memory having a storage capacity corresponding to picture data of several pages of A4-size originals, a display memory 15 as a display interface, a display controller 16, and a character/graphic processor (not shown).

A buffer memory area 14a is formed in a part of the page memory 14. A read/write operation of the area 14a is controlled by a counter (not shown).

The picture processing module 30 comprises an enlarging/reducing circuit 34 for enlarging/reducing picture data, a row/column converter 35 for row/column-converting and therefore rotating picture data, a compressing/expanding circuit (CODEC) 36 for performing compression for reducing redundancy of picture data and expansion for returning the reduced redundancy to the original redundancy, a scanner interface 37 for the scanner 20, a printer interface 38 for the printer 25, and an internal bus 39 for connecting the enlarging/reducing circuit 34, the row/column converter 35, the compressing/expanding circuit 36, the scanner interface 37, and the printer interface 38.

The communication control module 31 comprises a universal communication processor (UCP) 43 connected to external equipment such as a facsimile connecting mechanism (FCP) or a personal computer via an interface including RS-232C, GPIB, SCSI, and the like, and a bus communication processor (BCP) 44 connected to a local area network (LAN).

Control signals are transferred between the control module 11, the memory module 10, the picture processing module 30, and the communication control module 31 via the system bus 41. Picture data is transferred between the memory module 10 and the picture processing module 30 via the picture bus 42.

The display memory 15 stores picture data actually displayed in a window of the CRT display unit 24, i.e., picture data obtained by enlarging, reducing, rotating, inserting, or black/white-inverting picture data in the page memory 14.

The scanner 20 is, e.g., a two-dimensional scanning unit for two-dimensionally scanning an original of a document or the like and converting picture data on the original into an electrical signal.

The floppy disk unit 28 performs data recording or reproduction of recorded data with respect to a floppy disk 28a as a supply means or a floppy disk 28b as a magnetic storage means.

A text file as document data formed by a word-processor (not shown), a CAD graphic file as graphic data formed by a personal computer (not shown), and a code data file such as a work sheet file are recorded in the floppy disk 28a. The disk 28a is set to correspond to various operation systems (OS). A batch registration procedure descriptor file (PDF) or title information descriptor file (TDF) to be described later is recorded in the floppy disk 28b.

The optical disk unit 22 sequentially stores picture data read by the scanner 20 or code data read by the floppy disk unit 28, and picture data obtained by image-developing the code data in an optical disk 19 as an optical storage means.

The keyboard 23 supplies code information to be stored in the optical disk 19, a specific code corresponding to picture data as image data, and various operation commands. The CRT display unit 24 is a cathode-ray tube display unit as an output unit such as a display unit. The unit 24 displays picture data read by the scanner 20, code data read out from the floppy disk unit 28, picture data obtained by image-developing the code data, or code data or picture data read out from the optical disk unit 22. The unit 24 can simultaneously display a maximum of four documents by using four windows. For example, four vertical document data can be simultaneously displayed. Editing such as enlarging, reduction, rotation, scrolling, or the like is independently performed for document data in each window.

The printer 25 prints out, i.e., outputs as a hard copy picture data read by the scanner 20, code data read out from the floppy disk 28a, picture data obtained by image-developing the code data, code data and picture data read out from the optical disk unit 22, and picture data displayed by the display unit 24.

The magnetic disk unit 27 is a hard disk unit. The magnetic disk 27a loaded in the unit 27 stores various control programs, and search data as management data including a search code input from the keyboard 23, code data of one material corresponding to the search code, a storage address on the optical disk 19 in which picture data is to be stored, a data size, and a flag for confirming whether data is code data or picture data. The code data of one material and the picture data are stored in a search data area of the optical disk 19.

The storage address is a logic address. Upon accessing, a physical truck address and a physical sector address are calculated on the basis of the storage address.

The mouse 29 is a pointing unit. The mouse 29 arbitrarily moves a cursor on the display unit 24 in vertical and horizontal directions. By supplying a command at a desired position, a display content at the cursor position, e.g., various modes, an edited picture, a range of patching, and an icon are selected.

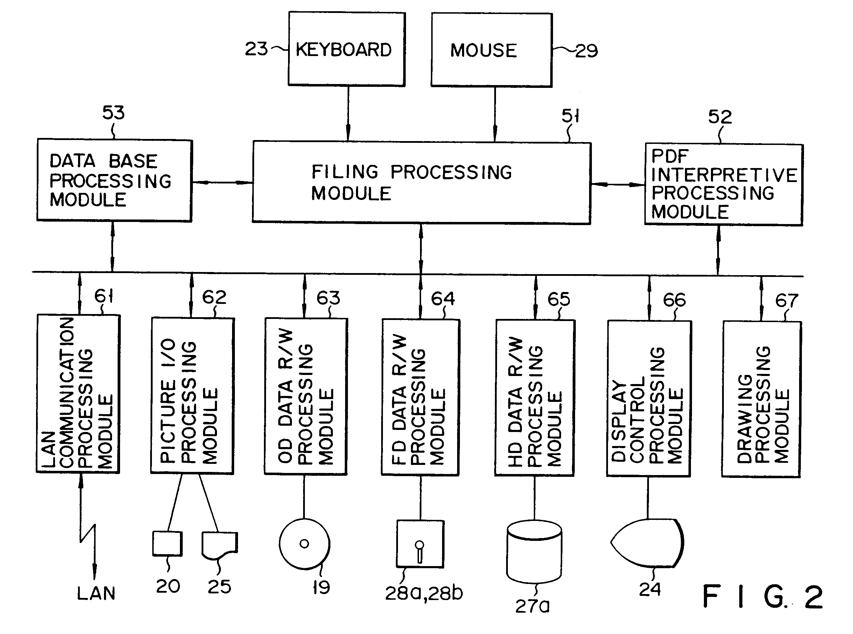

A structure of the control programs stored in the main memory 13, i.e., software will be described below with reference to Fig. 2. This software structure comprises a filing processing module 51 for controlling management/storage of picture data and input/output modules and performing man-machine interface control with respect to a user, a PDF interpretive processing module 52 for controlling a processing flow of the filing processing module 51 on the basis of batch registration procedure descriptor file (PDF) to be described later, a data base processing module 53 for managing storage information and attribute information associated with data registered in the optical disk 19, and input/output, display, and drawing control modules 61 to 67 operated under the control of the filing processing module 51.

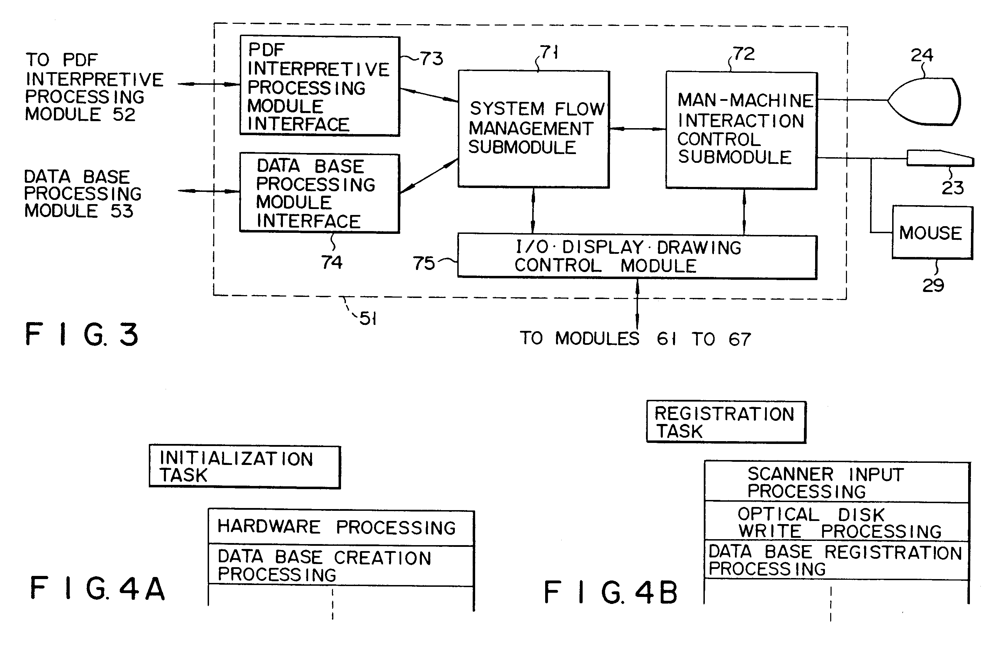

The filing processing module 51 will be described in detail below. Fig. 3 shows an internal arrangement of the module 51. As shown in Fig. 3, the module 51 comprises five submodules.

A system flow management submodule 71 sequentially outputs commands to and operates the input/output, display and drawing control modules 61 to 67 in accordance with tasks performed in the electronic filing apparatus of the present invention, e.g., a registration task, a search task, a print/output task, and a communication task. For example, as shown in Figs. 4A and 4B, the submodule 71 has a command list of each task to be commanded to the control modules and submodules and sequentially executes the command lists, thereby executing a series of tasks. Each command list includes a command destination, a command type, and a parameter. Information corresponding to each task is described in the command list. This will be described in detail later.

A man-machine interaction control submodule 72 performs display control when a user interacts with this system, control of input devices such as the keyboard 23 and the mouse 29, and management of a screen. In general processing in which a predetermined image is displayed on the display unit 24 and instructions are supplied from a user by using the keyboard 23 or mouse 29, the image is drawn on the basis of corresponding image structure data managed by the submodule 72. Upon reception of an input from the keyboard 23 or an instruction from the mouse 29, a command corresponding to the input or instruction is issued to cause the system flow management subflow module 71 to execute processing.

A PDF interpretive processing module interface 73 is provided as an interface between the system flow management subflow module 71 and the PDF interpretive execution processing module 52. When a user refers to the batch registration procedure descriptor file (PDF) to be described later via the man-machine interface control submodule 72 and instructs a series of processing operations on the basis of the PDF, the interface 73 causes the module 52 to read and interpret the PDF and supplies the result to the submodule 71.

A data base processing module interface 74 is provided as an interface between the system flow management subflow module 71 and the data base processing module 53 and requests registration or search of a document name or attribute information.

An input/output-display-drawing module control submodule 75 requests the I/O, display, and drawing modules 61 to 67 to execute processing in accordance with a command from the system flow management submodule 71.

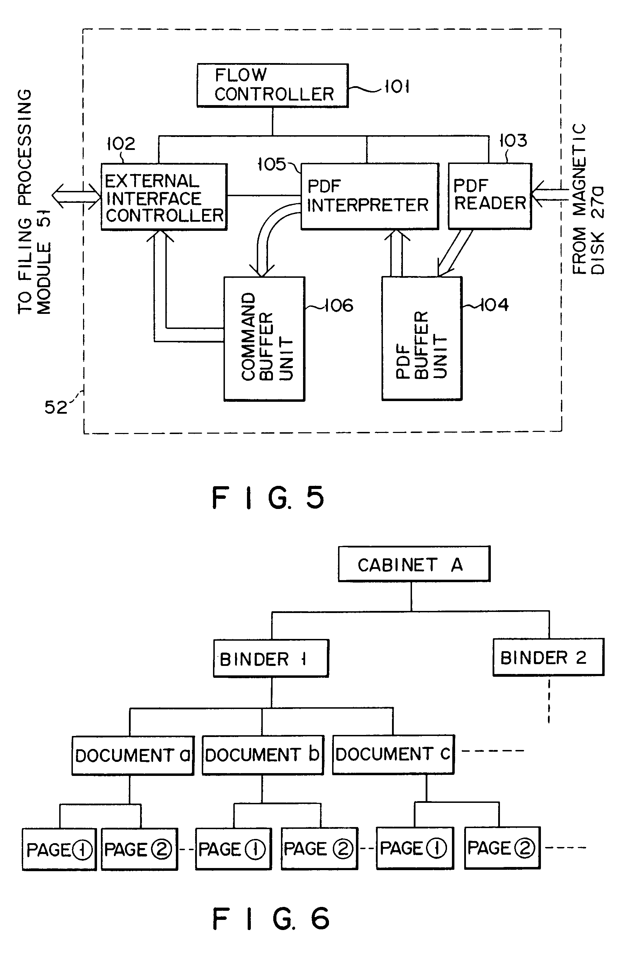

An internal arrangement of the PDF interpretive module 52 will be described below with reference to Fig. 5. The module 52 comprises a flow controller 101 for controlling the entire module 52, an external interface controller 102 for controlling an interface with respect to the filing processing module 51, a PDF reader 103 for reading the PDF from the magnetic disk 27a and storing the contents of the PDF in a PDF buffer unit 104 upon start of processing, and a PDF interpreter 105 for generating a batch management command string from data supplied from the buffer unit 104 and storing the command string in a command buffer unit 106. Even when the PDF and file data to be batch-registered together with the PDF are stored in different floppy disks 28b and 28a, the PDF is read out and stored in the buffer unit 104 upon start of processing. Therefore, the disk 28b may be replaced with the disk 28a containing the file to be batch-registered.

The module 52 supplies a command to the FD data R/W processing module 64 to control the processing of the disk 28b.

The data base processing module 53 performs the above processing. In this case, data to be managed is created and managed on the magnetic disk 27a, and a write or read request is issued to the FD data R/W processing module 65 to perform processing such as data search or updating.

The I/O, display, and drawing processing modules 61 to 67 will be described below.

The LAN communication processing module 61 exchanges data with external equipment (not shown) via a LAN. The data from the external equipment can be stored in the main memory 13 or the page memory 14 by the module 61. To the contrary, data in the main or page memory 13 or 14 can be transmitted to the external equipment.

The picture input/output processing module 62 controls the printer 25 for inputting and outputting a picture and performs transfer processing of picture data. Upon such control and processing, picture data supplied from the scanner 20 is output to the page memory 14, or picture data or code data stored in the page memory 14 is output to the printer 25.

The OD data R/W (read/write) processing module 63 controls the optical disk unit 22 and performs read/write processing of data on the optical disk 19. The module 63 can perform read/write processing for the main memory 13 and read/write processing for the page memory 14. In the latter write processing, encoding/decoding processing can be performed via the CODEC 36.

The FD data R/W (read/write) processing module 64 controls the floppy disk unit 28 and performs data read/write processing for data on the floppy disks 28a and 28b. The module 64 can perform read/write processing for the main and page memories 13 and 14. When data is to be read out from the page or main memory 14 or 13, the module 64 can add attribute information of the data to the data as a header. To the contrary, when data is to be written in the floppy disk 28a or 28b, the module 64 can remove the header or update the contents of the header.

The HD data R/W (read/write) processing module 65 controls the magnetic disk unit 27 and performs read/write processing for data on the magnetic disk 27a. The module 65 can perform read/write processing for the main and page memories 13 and 14. When data is to be read out from the page or main memory 14 or 13, the module 65 can add attribute information of the data to the data as a header. On the contrary, when data is to be written in the disk 27a, the module can remove the header or update the contents of the header.

The display control processing module 66 transfers picture data to the page memory 14 to display the data and drives the drawing processing module 67 to be described next to draw and display characters, tables, ruled lines, figures, and the like on the display memory 15. When data in the page memory 14 is to be displayed, the data can be supplied to the enlarging/reducing circuit 34 and the row/column converter 35, if necessary, so as to be displayed in various sizes or after it is rotated.

The drawing processing module 67 controls character drawing processing or straight line drawing processing. In this case, the module 67 controls a drawing means (not shown) registered in the memory module 10 to execute the processing.

The batch registration procedure descriptor file (PDF) will be described in detail below.

The PDF is a file of data in which a procedure for batch registration is described. Data to be input designated by the PDF can be batch-registered in a designated registration destination. The PDF is stored in, e.g., a personal computer or the floppy disk 28b by the apparatus of the present invention beforehand. The data to be input includes file data as code data supplied from the floppy disk 28b, picture data as image data supplied from the scanner 20, picture data obtained by image-developing code data supplied from the floppy disk 28a and the like. These various data are stored on the optical disk 19 and managed by a hierarchical structure constituted by cabinets (CAB), binders (BIND), documents (DOC), and pages (PAGE) as shown in Fig. 6. The various data, i.e., the code and image data correspond to a hierarchical level of PAGE.

A registration destination described in the PDF represents a hierarchical level to which data to be input corresponds, i.e., represents whether the data is to be registered as a new document in a binder 1 of a cabinet A, additionally registered as a page in a document a, or registered as a modified version of a page 1 .

Data can be registered with a title, i.e., a key word in the document level of the hierarchical structure so that necessary information can be searched by using the title.

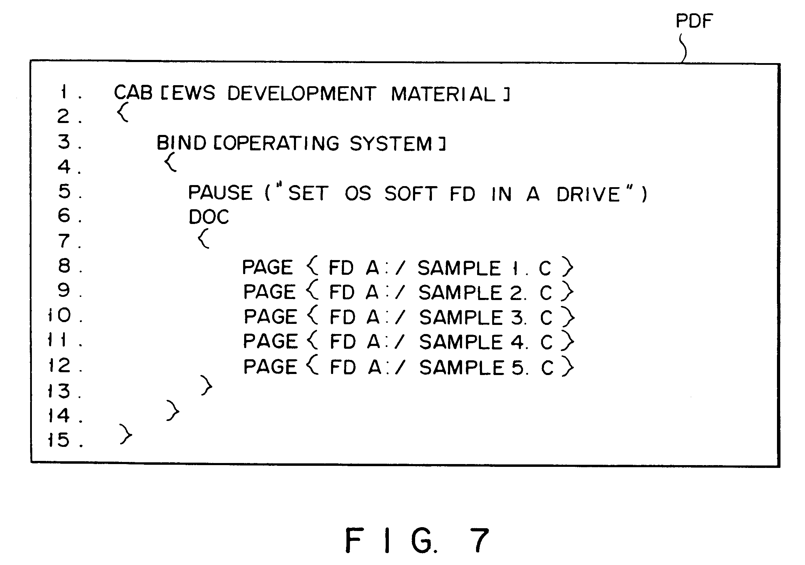

Fig. 7 shows an example of the PDF. Referring to Fig. 7, the first line represents a cabinet name of a registration destination, and contents from "{" on the second line to "}" of the 15th line represent a registration procedure for an "EWS development material" cabinet. The third line represents a binder name of the registration destination, and contents from "{" on the fourth line to "}" on the 14th line represent a registration procedure for an "operating system" binder. Similarly, "{" on the seventh line represents the start of descriptor for a document, and "}" on the 13th line represents the end of a registration procedure for the document. The eighth to 12th lines represent a registration procedure for a page.

As described above, the hierarchical levels of a cabinet, a binder, a document, and a page are expressed by a nested structure constituted by "CAB {...}", "BIND {...}", "DOC {...}", and "PAGE {...}", thereby determining the registration destination.

"PAUSE" on the fifth line represents that a message is displayed on the CRT display unit 24 and a confirmation instruction from an operator is waited. That is, a message "set OS soft FD into A drive" is displayed, and then a confirmation key input is waited. When an operator depresses the key, the registration procedure from the sixth line is executed. In this embodiment, "PAUSE" is used so that an operator does not forget to set the floppy disk 28a.

The eighth line represents a registration procedure for a page. Information concerning the data to be input is described between "{" and "}".

"FD" represents input data from the floppy disk 28a. "A:/SAMPLE1.C" represents a file SAMPLE1.C in a route directory in the disk 28a set in the A drive. Descriptor on each of ninth to 12th lines is similar to that on the eighth line.

When the PDF shown in Fig. 7 is executed, a new document is formed in the "Operating system" binder of the "EWS development materials" cabinet, and the five file data from "/SAMPLE1.C" to "/SAMPLE5.C" in the disk 28a set in the A drive are registered as page data on the optical disk 19.

An item described in "PAGE {...}" will be described below. In "PAGE {...}", an item concerning the data to be input as page data is described. A format of the item is {input device parameter option}.

As the input device, "FD" is described when file data is input from the disk 28a, "SCN" is described when picture data is input from the scanner 20, and "DIR" is described when directory information in the disk 28a is input. In the case of the disk 28a, a full pass name of a file name in the disk 28a is described as the parameter. That is, all directories from the top directory to a directory of the file in the directories of the hierarchical structure can be described.

When "FD" is described as the input device, the following descriptor can be made as an option.

### [-DK Drawing Type]

A drawing type for image-developing code data is determined. As the drawing type, "TEXT", "DUMP", "PLTDSC1", and "others" can be described. "PLTDSC1" represents that plotter data is to be processed. In the case of "TEXT", code data is a shift JIS code string. When the shift JIS code string is registered with this option, it is analyzed upon search display to activate a program for image development, so that its content can be confirmed. When this option is not added to data, "others" is added thereto. Therefore, only a directory name, a file name, and the like are displayed as a pass name of a file upon content display.

### [-IMG Imaging Format]

When this option is designated, code data input from the floppy disk 28a as file data is image-developed by a method designated by the drawing type, and this image-developed picture data is registered in the optical disk 19. As the imaging format, "AUTO", "A4/200", "B4R/400", and the like can be described. In the case of "AUTO", an image size is determined in accordance with a format defined in the file data. In the case of "A4/200", an A4 size with a density of 200 dpi (dot per 2.54 cm) (dot per inch) is set as an image size. In the case of "B4R/400", a B4 lateral size with a density of 400 dot per 2.54 cm (dpi) is set as an image size. Image development is performed in accordance with these image sizes. Since picture data imaged by this designation is registered, data can be displayed at higher speed than in a case wherein data is image-developed and then displayed upon search. When this option is not added to data, file data is directly registered, i.e., registered as code data in the optical disk 19.

The following designation can be performed for the image data.

### [-ENCD Encoding System]

"MH", "MR", and "MMR" for designating an image data compression encoding system or "NON" for designating non-encoding can be designated. When this option is not designated to image data, an encoding system as a standard of the system is designated.

When "SCN" is designated as the input device, the following descriptor can be designated as an option.

### [-PAPER Original Size]

A paper size of an original to be set in the scanner 20 is designated. Similar to the imaging format described above, the original paper size is described as "A4/200". When this option is not designated, an original paper size set by a control panel (not shown) of the scanner 20 is set.

### [-ADF Input Count]

An input of an original from an ADF cassette (not shown) of the scanner 20 is designated. In addition, the number of input pages is described by the input count. When the input count is omitted, the number of input pages is one. When "*" is described in the input count, the number of originals set in the ADF cassette is input. When this ADF input is designated, a plurality of pages are input. Therefore, "PAGES" is described in place of "PAGE" to clearly show that a plurality of pages are being input. When this ADF input designation option is not added to data, one original is input by a method of, e.g., BOOK or ADF set in the scanner 20.

### [-IATR Picture Attribute]

An attribute of a picture input by the scanner 20 is designated. "BINARY", "PHOTO", or the like is described as the picture attribute. In the case of "BINARY", a binary picture is input. In the case of "PHOTO", a picture is input as a photograph having gradation. When this option is not designated, data is input with a picture attribute set in the scanner 20.

### [-ENCD Encoding System]

This option is identical to the above-mentioned encoding system.

When "DIR" is set as the input device, a directory name is described as a parameter. When "A:/*.*" is described, a list of all file names in a route directory in the floppy disk 28a set in the A drive is input as directory information. When "A/*.C" is described, files having "C" at the end of a file name are searched in the route directory in the disk 28a set in the A drive, and a list of these file names is input as directory information.

The following descriptor can be made as an option.

### [-S Sorting Type]

File names in the list are rearranged by a method according to a sorting type. As the sorting type, "NAME", "TIME", and the like can be described. In the case of "NAME", file names are rearranged in an alphabetical order. In the case of "TIME", file names are rearranged in an order of file formation dates from the earliest one. When this option is not designated, file names in the list are arranged in an order stored in the floppy disk 28a.

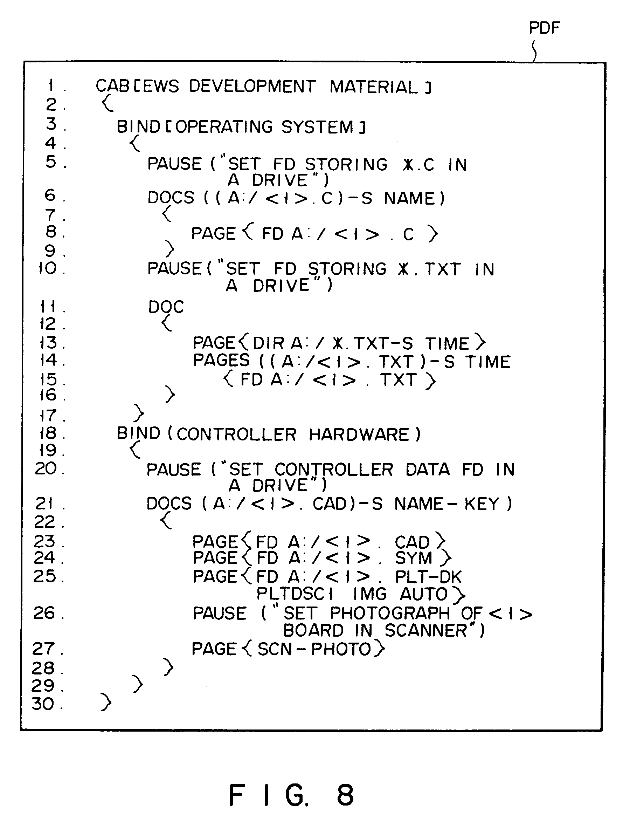

In the case of the PDF shown in Fig. 7, file data in the disk 28a, the name of which is already known, is input. Fig. 8 shows a PDF for searching a file satisfying certain conditions from the disk 28a and batch-registering corresponding files in the optical disk 19. A cabinet to be registered is set as "EWS development materials" on the first line, and a binder is set as "operating system" on the third line. On the fifth line, a message is displayed on the CRT display unit 24 to wait for an operator's confirmation.

The sixth to ninth lines represent a descriptor concerning a document. "DOCS" represents a wild card as a descriptor for a plurality of documents, and contents from "(" to ")" represent a descriptor for determining each document. "(A:/<1>.C)" means that files having "C" at the end of a file name in the route directory of the floppy disk 28a set in the A drive is to be searched and the first half of each file name satisfying this condition is to be represented by a parameter "<1>". "-S NAME" means that the file names satisfying the above condition are to be rearranged in an alphabetical order, similar to the option described in the above directory information. When three files satisfying the above condition, e.g., "TEST1.C", "TEST2.C", and "TEST3.C" are present in the route directory of the disk 28a, a procedure from the seventh to ninth lines is executed three times, and a value of "TEST1", "TEST2", or "TEST3" is substituted in the variable "<1>" upon each procedure. In this case, three documents are newly formed, and "A:/TEST1.C" file data, "A:/TEST2.C" file data, and "A:/TEST3.C" file data are registered in the page level for the respective documents.

After a message is displayed and a confirmation is waited on the tenth line, the next document registration is started, and the first page is registered on the 13th line. In this case, a list of file names satisfying the condition of "A:/*.TXT" in the disk 28a set in the A drive and sorted in an order of file formation dates is registered as page data. From the second page, the files are registered as page data in an order listed in the file name list. In order to search the data registered as described above, the file name list on the first page is displayed, a required file is searched from the list, and a page having a number obtained by adding "1" to the searched number is read out, thereby obtaining the required file.

From the 18th line, registration in another "controller hardware" binder in the same cabinet is started. On the 20th line, a message is displayed on the display unit 24, a confirmation is waited, and then registration of a document begins.

A descriptor on the 21st line represents registration of a plurality of documents. That is, files satisfying "A:1<1>.CAD" are searched from the route directory in the disk 28a, names of the searched files are sorted in an alphabetical order, and the file names are substituted in "<1>" from the 23rd to 28th lines. This page registration processing is repeated the number of times corresponding to the number of files. "-KEY" on the 21st line represents that a file name represented by <1> is to be added to this document as a title (key word).

When "ABC" and "DEF" satisfy "A:/<1>.CAD", a title "ABC" is added to the first document, and four pages of picture data obtained by image-developing "A:/ABC.CAD", "A:/ABC.SYM", and "A:/ABC.PLT" files in accordance with the drawing type of PLTDSC1 corresponding to a plotter and picture data obtained by inputting a photograph of an "ABC board" set in the scanner 20 with a PHOTO attribute are registered as page data.

After four-page data concerning "DEF" in the second document, this PDF processing is ended. By using the PDF as described above, required files can be selected from the files stored in the disk 28a and batch-registered as documents or pages in a desired order.

Therefore, before an operator performs a batch registration task, the PDF is formed by a personal computer and registered in the floppy disk 28b. By setting the disk 28b in the apparatus of the present invention, the registered PDF is read out and registered in the magnetic disk 27a. Thereafter, by setting the floppy disk 28a, in which files to be subjected to batch registration are registered, in the apparatus of the present invention, a batch registration task based on the PDF registered in the magnetic disk 27a is started.

When the PDF is formed by using the keyboard 23 of the apparatus of the present invention and registered in the disk 27a, by setting the disk 28a, in which files to be subjected to batch registration are registered, in the apparatus of the present invention, the batch registration task based on the PDF registered in the disk 27a is started.

The PDF registered in the disk 27a is interpreted by the PDF interpretive processing module 52 and converted into a command string for the filing processing module 51. The module 51 executes the processing in accordance with this command string, thereby performing the batch registration processing.

An operation of the registration task will be described below.

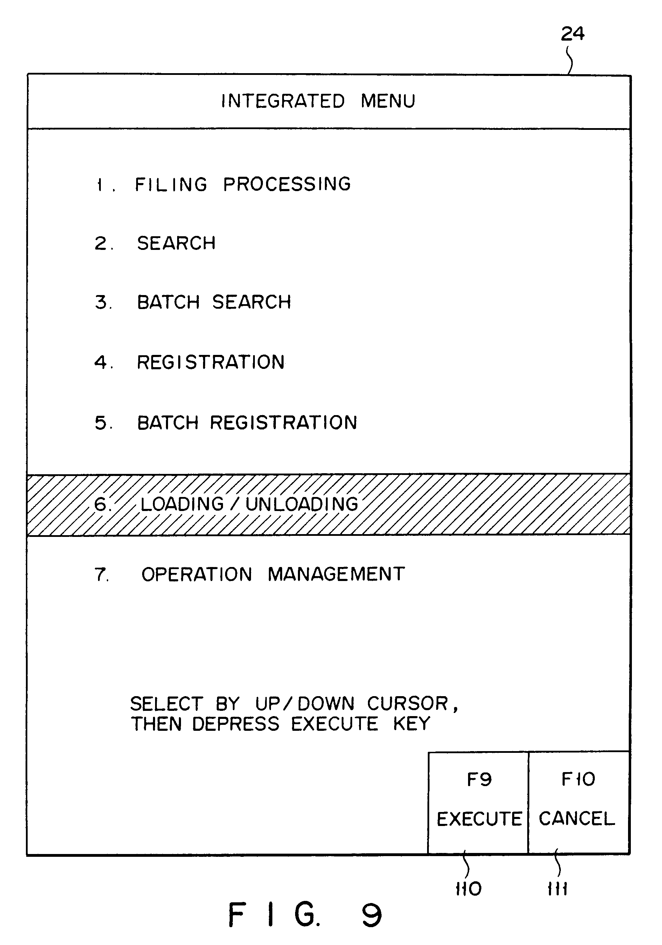

Information displayed on the CRT display unit 24 while PDF batch registration is performed will be described. When the apparatus is switched on, a menu screen called an integrated menu is displayed on the unit 24 as shown in Fig. 9. On this screen, functions which can be realized by this apparatus are itemized, and one of the functions is always highlighted by means of black/white inversion. "Optical disk loading/unloading" and "batch registration" are displayed as functions associated with the PDF batch registration.

In order to execute the PDF batch registration, a user must load the optical disk 19. A loading function is designated as follows. That is, a mouse cursor displayed on the screen of the display unit 24 is moved by the mouse 29 or keyboard 23 to a portion on which "optical disk loading/unloading" is displayed. The mouse 29 or keyboard 23 is depressed to pick and highlight the function. By depressing an "execute" function key 110, loading is executed. If a "cancel" function key 111 is depressed, this function is not executed, and a function desired by the user can be designated. After loading is executed, the integrated menu screen is displayed.

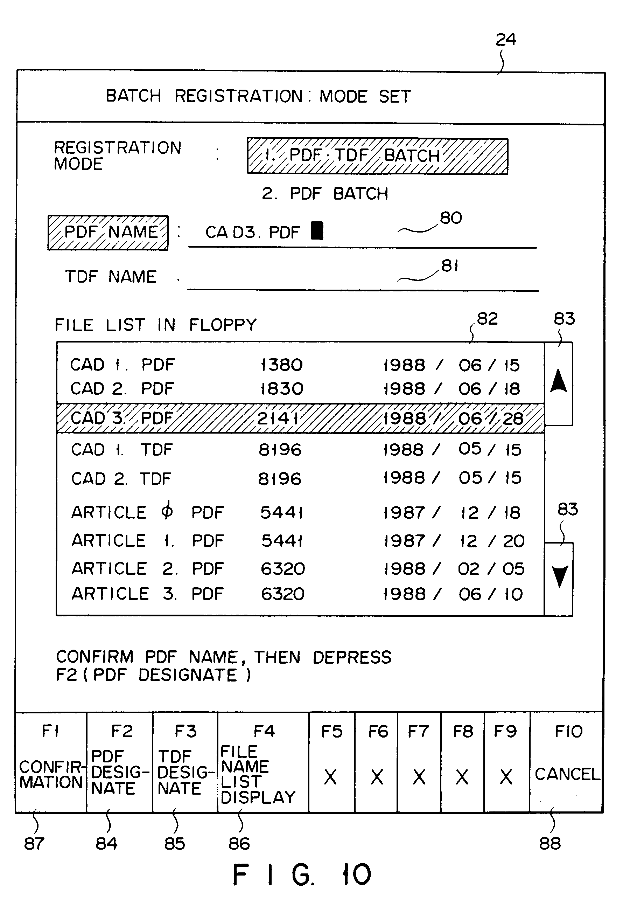

After the optical disk 19 is loaded, a "batch registration" item is indicated and picked from the integrated menu by the mouse cursor. By depressing the "execute" key 110, a screen shown in Fig. 10 is displayed on the unit 24. This screen is displayed so that the user designates a "batch registration procedure descriptor file" (to be referred to as a "PDF" hereinafter) and a "title information descriptor file" (to be referred to as a "TDF" hereinafter).

On the screen, "registration mode selection" is displayed, and two types of mode names, "PDF batch" and "PDF/TDF batch" are displayed under that. In the former mode, pieces of picture information designated by the PDF are simultaneously registered in the optical disk 19 as designated. In the latter mode, in addition to a function of the PDF batch mode, title key information described in the TDF is referred to execute automatic title generation. The user can designate one of the two modes by the same method as for selecting a function on the "integrated menu" screen. That is, the user moves the mouse 29 or depresses the keyboard 23 to move the mouse cursor displayed on the screen, thereby designating a desired function name. The mouse 29 or keyboard 23 is then operated to highlight the designated function.

After the registration mode is designated, necessary PDF and TDF names are designated. At this time, a message "designate PDF/TDF" is displayed on the screen of the unit 24. The screen also displays a descriptor area 80 in which a PDF name is described, a descriptor area 81 in which a TDF name is described, and an information list 82 in which file names stored in the floppy disk 28b, their file attributes, and the like are listed. When the disk 28b is loaded in the floppy disk unit 28, the file name list 82 stored in the disk 28b can be displayed, and one of the files is always highlighted by means of black/white inversion. Arrow marks 83 are displayed at the side of the file name list and indicate upward and downward directions, respectively. By indicating the arrow marks 83 by the mouse cursor and depressing the mouse 29 or a key on the keyboard 23, a desired file which is highlighted in the list 82 can be vertically changed. Alternatively, without using the marks 83, a described file name can be picked and designated by the mouse cursor.

A file designating method performed in the "PDF/TDF batch" mode will be described below. In the "PDF/TDF batch" mode, two files of the PDF and TDF are required. In order to designate a PDF, the floppy disk 28b including the PDF is loaded in the floppy disk unit 28. A name of a file to be used as the PDF is picked by the mouse cursor from the file name list 82 in the floppy disk and highlighted. Subsequently, an item of a type to which the file corresponds, i.e., the item of "PDF name" is designated by the mouse cursor, and the mouse 29 or a key on the keyboard 23 is depressed, thereby highlighting the file name in the "PDF name" descriptor area 80. Since a text cursor is also displayed in the area 80, a text input can be performed by the keyboard 23 if the designated file can be changed. After the PDF name to be designated is displayed, a function key 84 of "PDF designate" is depressed. As a result, the designated file in the "PDF name" descriptor area 80 is copied from the disk 28b to the magnetic disk 27a. In this manner, designation of the PDF is completed.

A TDF is then designated. Designation of the TDF is performed in substantially the same manner as that of the PDF. That is, a name of a file to be used as the TDF is indicated and picked by the mouse cursor from the file name list 82 in the floppy disk 28b and highlighted. Subsequently, the item of "TDF name" is indicated by the mouse cursor, and the mouse 29 or a key on the keyboard 23 is depressed. The file name is then displayed in the descriptor area 81 for "TDF name". Since a text cursor is also displayed in the area 81, a text input can be performed by the keyboard 23 if the designated file is to be changed. After the TDF name to be designated is displayed, a function key 85 of "TDF designate" is depressed. As a result, the designated file in the area 81 is copied from the disk 28b to the magnetic disk 27a, thereby completing designation of the TDF.

When floppy disks 28b must be exchanged upon designation of the PDF and TDF as in a case wherein, e.g., the PDF and TDF are stored in different floppy disks 28b, after the disks 28b are exchanged, a function key of "file name list display" is depressed. As a result, a file name list stored in the disk 28b loaded in the floppy disk unit 28 at this time is displayed. Note that file designation is not completed until the function key of "PDF designate" for the PDF or "TDF designate" for the TDF is depressed. In addition, in the "PDF/TDF batch" mode, an order of designating the PDF and TDF is not limited to a specific order.

When the "PDF batch" mode is designated, only a PDF must be designated. The PDF is designated as described above, i.e., a file to be designated is indicated and picked by the mouse cursor from the file list in the floppy disk 28b, and the item "PDF name" is then picked to display the file name in the descriptor area 80. The "PDF designate" function key 84 is depressed to complete PDF designation. In this mode, in order to inform a user that a TDF need not be designated, characters in the "TDF name" descriptor area 81 are displayed in a different way by means of, e.g., blurred characters.

After the file required for the registration mode is designated, a "confirmation" function key 87 is depressed. Upon this operation, registration mode selection and the PDF/TDF designation procedure are completed. If the PDF or TDF required for batch registration is not designated yet after the "confirmation" key 87 is depressed, an alarm such as "PDF (TDF) file is not designated. Designate PDF (TDF)" is displayed on the screen of the CRT display unit 24, and an input is waited.

If the "cancel" function key 88 of is depressed on this screen, a previous screen, i.e., the "integrated menu" is displayed.

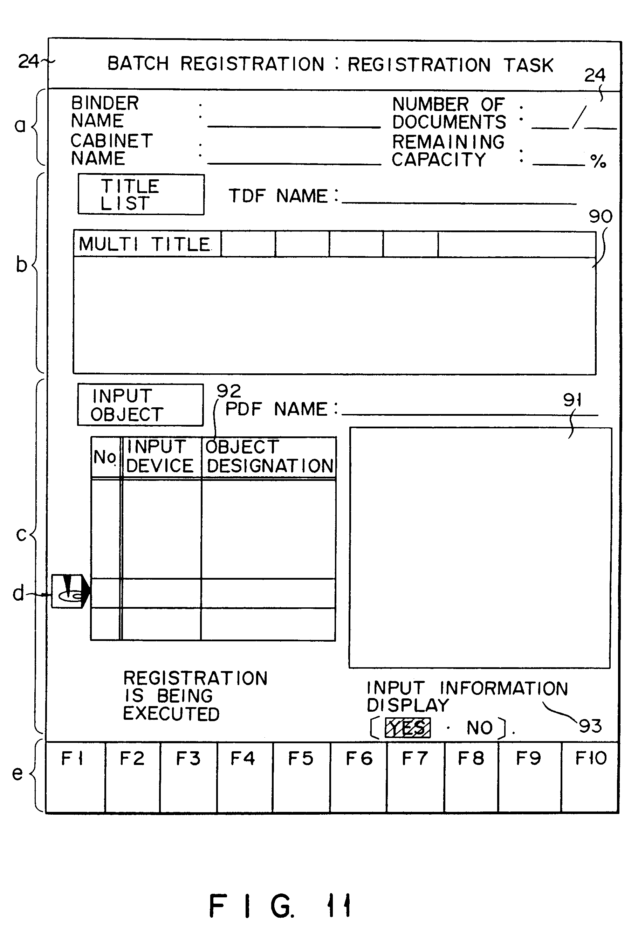

When the batch registration mode and the PDF/TDF names are designated and the "confirmation" key 87 is depressed on the mode set screen (see Fig. 10), a registration task screen (Fig. 11) is displayed. On this screen, title key batch formation using the designated TDF and inputting of a registered picture and execution of registration using the designated PDF are performed.

Information displayed on the screen is roughly divided into four areas.

The first area is an information area a for a registration destination. The area a displays a cabinet name of the loaded optical disk 19, a binder name to be registered, the number of documents currently registered in the binder, and a remaining amount of information which can be registered in the binder.

The second area is an area b for displaying document title information. In this area b, title information concerning a document to be registered is displayed in a title list 90. If the "PDF/TDF batch mode" is designated as the registration mode, the designated TDF name is displayed. In addition to title keys, the title list 90 displays a multi title number of each title when one document has a plurality of titles, the number of registered pages in one document, and the number of pages which can be additionally registered. When this screen is displayed for the first time upon setting of the batch registration mode (after the display of Fig. 10), title information corresponding to the first document described in the TDF is displayed.

The third area is an area c for displaying information to be input. In this area c, the contents of the designated PDF are interpreted, and one document of information to be input is displayed. The area c includes a display of designated "PDF name", an "input object display window" 91 in which a picture designated by an input object cursor is displayed, and an "input object list" 92 in which input object names designated by the PDF, their attributes, or input options are displayed.

The "input object list" 92 will be described. The list 92 is displayed so that a user can confirm information to be subjected to batch registration. In the list 92, a program of one document in the designated PDF is interpreted and input objects are itemized in a registration order from the top. Items are, "No.", "input device", and "object designation". When this screen is displayed for the first time after mode setting shown in Fig. 10, input object information of one document described first in the designated PDF is displayed in the "input object list" 92.

The "No." item displays an input object number corresponding to the number of each input object designated by the PDF. The "input device" item displays a name of a device for inputting each object, e.g., "8.9 cm (3.5") FDD", "13.33 cm (5.25") FDD, "20.32 (8") FDD", or "scanner". The "object designation" item describes a file name, attribute designation, and the like. When the object is an image picture read from the scanner 20, scanner parameters in the scanner 20 such as the presence/absence of an automatic document feeder (ADF), the number of input pages, a picture read density, a read mode, and a paper size are designated. When the object is information from the floppy disk 28a, types of a text, a CAD code data, and the like of the information, and designation of whether the information is to be registered after it is imaged are displayed.

When batch registration is started, the column of information in the list 92 registered in the optical disk 19 is highlighted by means of a halftone display or the like. An input object cursor d is displayed at the side of a currently registered information or information to be registered next when registration is stopped. The cursor d is moved on the list 92 as information is registered.

An item 93 is displayed so that a user can designate whether an input object is displayed in association with the "input object display window" 91. When "Yes" is picked and designated by the mouse cursor in the item 93, a picture of an input object to be registered next is displayed or an input object file name and its data type, an attribute, and the like are displayed if a picture of information cannot be displayed, in the window.

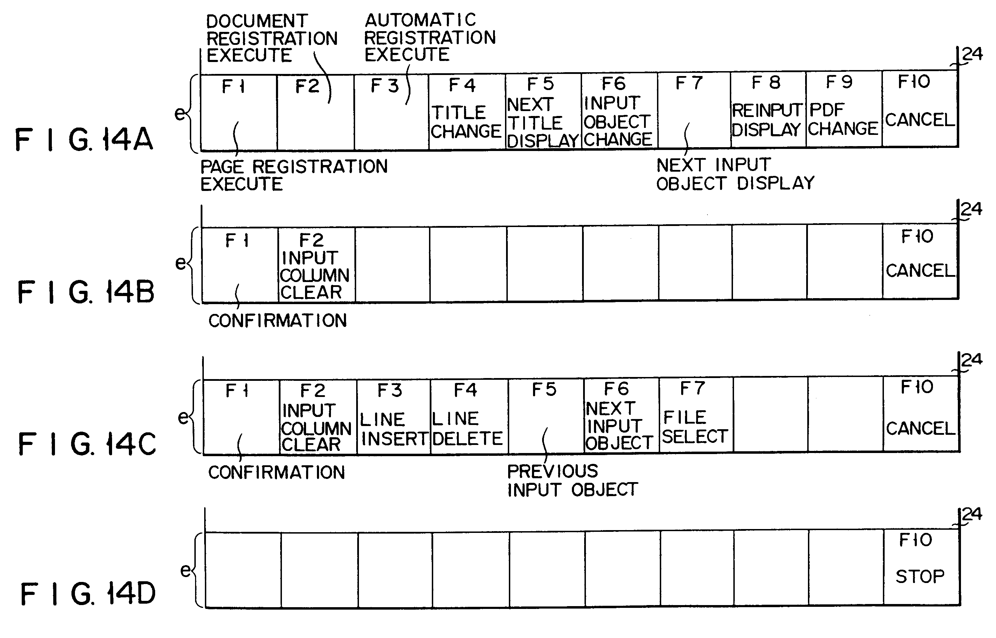

The fourth area is an area e for displaying a function name designated by each function key. As shown in Figs. 14A to 14D, 10 types of functions keys F1 to F10 are designated in the area e. A function to be assigned to each key is designated again in each mode. In this case, the modes include "registration execution mode", "input object change: main mode", "input object change: file selection mode", and "PDF change mode".

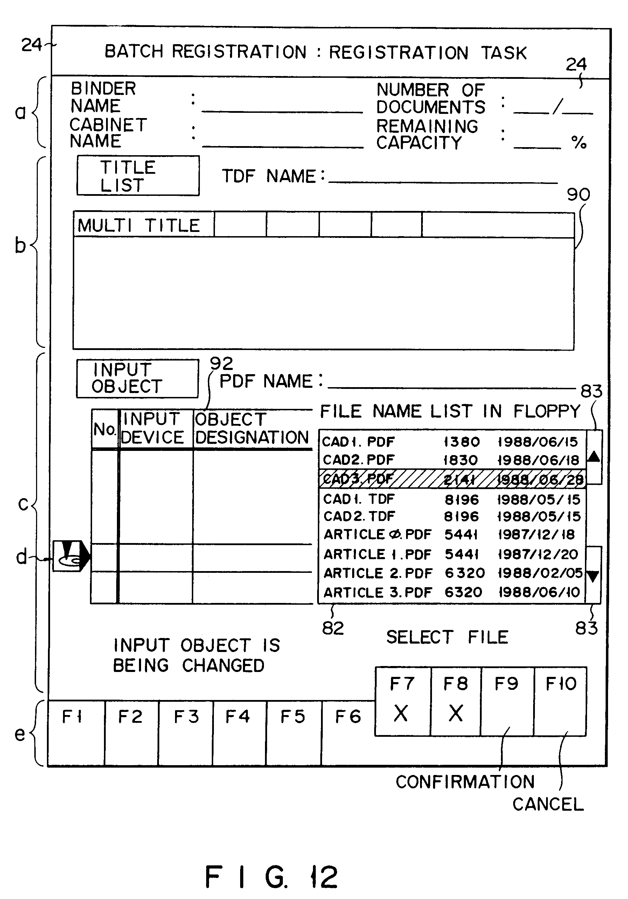

The "input object change: file select mode" key F6 will be described below. In this mode, a file in the floppy disk 28a is arbitrarily designated by a user and added to the "input object list" 92 as an input object. At this time, a screen as shown in Fig. 12 is displayed, and the floppy file name list 82 is displayed on the screen. This list includes file names stored in the floppy disk 28a loaded in the unit and their attributes such as file sizes and formation dates. When the user designates that a file is added to input objects, the file name, for example, is highlighted by a halftone display. In this list, a plurality of file names can be designated.

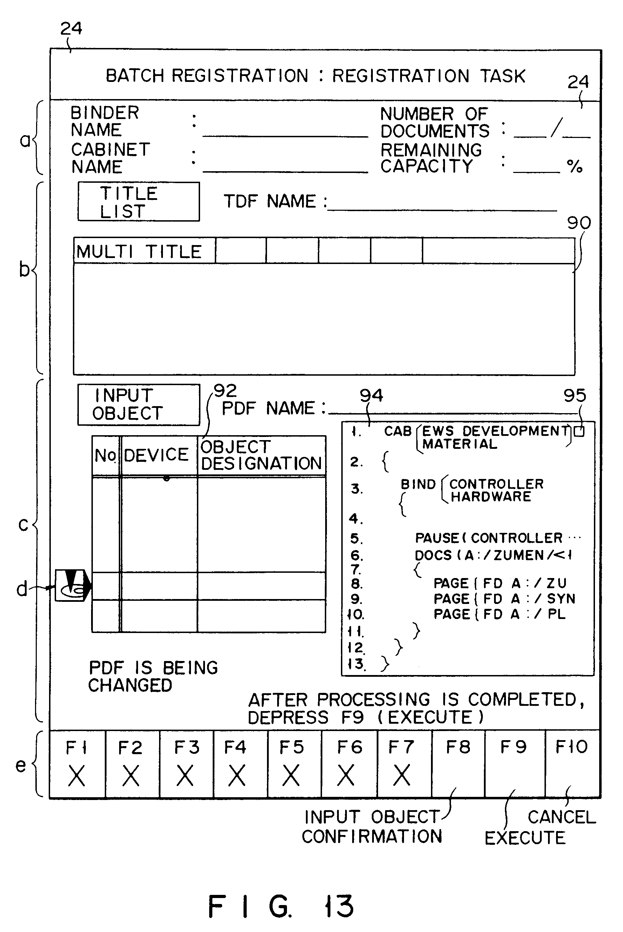

When the "PDF change mode" key F9 is depressed, a screen as shown in Fig. 13 is displayed. In this case, the contents of the designated PDF are displayed in a "PDF change window" 94 together with a text cursor 95, so that a user can arbitrarily change the contents of the PDF by inputting characters from the keyboard 23. In this mode, since both the "PDF change window" 94 and the "input object list" 92 are displayed on the screen, the user can simultaneously confirm the change result of contents of the PDF in this mode.

Functions, operations, and internal processing of the function keys F1 to F10 in the batch registration/registration task screen (Fig. 11) will be described below. The keys F4 to F10 will be described first.

The "title key change" key F4 has a function of correcting/changing a key value of a title to be added to a document to be registered on the screen.

When the key F4 is depressed, displays of the respective function keys on the batch registration/registration task screen (Fig. 11) are updated from those shown in Fig. 14A to those shown in Fig. 14B, and a character cursor appears in a column of the first key value of the title list 90. The character cursor is moved to a column of a title key value to be changed by an arrow key, and a new title key value is input from the keyboard 23. The "input column clear" key F2 shown in Fig. 14B clears all title key values displayed in the title list. When a user confirms that all of the key values of titles to be added to a document to be registered are correct, he or she depresses the "confirmation" key F1 to return the previous function key displays (Fig. 14A). Another function associated with title change may be assigned to each function key.

The "next title display" key F5 updates the entire title list on the batch registration/registration task screen (Fig. 11). That is, contents of a title to be added to the next document described in the TDF are read out and displayed in the title list 90. This function is effective when a relationship between a document to be registered next and a title to be added to the document is to be confirmed prior to registration execution.

When the "next title display" key F5 is depressed, the contents of the title to be added to the next document described in the TDF are read out, and the number of the list 90 is counted up by one, thereby displaying the contents of the readout title.

When the function select key is depressed and subsequently the "next title display" key F5 is depressed, contents of a title of an immediately preceding document described in the TDF are read out, and the number of the list 90 is counted down by one, thereby displaying the contents of the title read out from the TDF.

The "input object change" key F6 has a function of adding, deleting, correcting, and changing an input object which corresponds to each item of a document to be registered on the screen.

When the "input object change" key F6 is depressed, a function key section on the batch registration/registration task screen (Fig. 11) is updated from that shown in Fig. 14A to that shown in Fig. 14C, and a character cursor appears on the first line of a non-registered portion. The arrow key is used to move the character cursor to a position of an input object to be changed, and a device name, a file name, and the like are input from the keyboard 23. At this time, the "input column clear" key F2 clears all the contents of the input object displayed in the input object list 92. The "one line insert" key F3 inserts a blank line so that a new input object can be added immediately before a line on which the character cursor is present, and the character cursor appears at the start of the new line. After one line is inserted, new input object numbers are added. The "one line delete" key F4 deletes the line on which the character cursor is present. After one line is deleted, the following are moved forward, and new input object numbers are added. The "next input object" key F6 forcibly moves the input object pointer d displayed at the left side of the input object list 92 on the screen (Fig. 11) to a position of the next input object in the list 92. In this manner, a specific input object in the input object list 92 can be excluded from the registration processing. When the pointer d indicates the last input object in the list 92, however, it cannot be moved. The "previous input object" key F5 forcibly moves the pointer d displayed at the left side of the list 92 on the screen (Fig. 11) to a position of an immediately preceding input object. Since the pointer d is for designating an input object to be registered next, it cannot be moved to a position of a registered input object, i.e., an input object highlighted by means of, e.g., a halftone display. In addition, the pointer d cannot be moved when it designates the first input object in the input object list 92. Upon input of a file name in the list 92 by the "file select" key F7, by selecting a file name from the file name list 82 temporarily displayed on the screen instead of inputting the file name from the input object list 92. When the character cursor is moved to a column of an input object to be changed by using the arrow key and the "file select" key F7 is depressed, a window of the list 82 is opened (Fig. 11) on the batch registration/registration task screen (Fig. 11), and the list 82 stored in the floppy disk 28a loaded in the floppy disk unit 28 is displayed. Since a frame cursor is initially located at the first file name, the arrow keys 82 are used to move the frame cursor to a file name to be selected as an input object, and the "file select" key F7 is depressed again. The window of the list 82 is closed, and the selected file name is displayed in a column of a file name at which the character cursor is present. After addition, deletion, correction, and changing of the input object corresponding to each page of a document to be registered are finished, the "confirmation" key F1 is depressed. As a result, the function key section is returned, and the input object change processing is finished.

The "next input object" key F7 updates the entire input object list 92 on the batch registration/registration task screen (Fig. 11). That is, a portion relating to the next document described in the PDF is read out and interpreted, and the list 92 is arranged and displayed. This function is effective when a relationship between an input object corresponding to a document to be registered and a title to be added to the document is to be confirmed prior to execution of registration.

When the key F7 is depressed, a portion relating to the next document described in the PDF is read out, and the readout contents are interpreted to prepare information required to display the input object list 92. Thereafter, the number of the list 92 is counted up by "1", and the list 92 is displayed.

When the function select key is depressed and subsequently the "next input object" key F7 is depressed, a portion relating to an immediately preceding document described in the PDF is read out, and its contents are interpreted, thereby preparing information required to display the input object list 92. Thereafter, the number of the list 92 is counted down by "1", and the list 92 is displayed.

If an error occurs upon read-out of an input object designated in the list 92, i.e., described in the PDF, the "re-input" key F8 processes the error and reads out the same input object from the designated device. This function is effective when picture data must be input again, e.g., when the scanner 20 is not prepared while the PDF describes that the scanner 20 inputs or when the same data is to be input from the scanner 20 because an original set at the scanner 20 has a skew. When "Yes" is designated in the item 93 for displaying input information, contents or picture data of the file stored in the input object display window 91 are drawn so that a user can confirm them.

When the "re-input" key F8 is depressed, an input object designated by the input object pointer d in the list 92 is read out by a designated device. In a case wherein "Yes" is designated in the item 93 for displaying the input information, if a file is read out from the floppy disk 28a, the contents of the file are developed and drawn. In this case, if picture data is read out from the scanner 20, a picture of the data is displayed. In these cases, since not registration but only re-input is executed, the position of the input object pointer d is not changed.

The "PDF change" key F9 has a function of directly correcting/changing the contents of the PDF described by using a procedure descriptor language in association with an input object displayed in the input object list 92 on the batch registration/registration task screen (Fig. 11). The change result is immediately reflected on the list 92.

When the key F9 is depressed, the PDF change window 94 (Fig. 13) is opened, the contents of the PDF are displayed by the procedure descriptor language, and the text cursor 95 appears. A portion to be corrected/changed is input from the keyboard 23, and a "display" icon of the window 94 is depressed. As a result, a descriptor concerning a document to be registered next to the changed PDF descriptor is interpreted and displayed on the input object list 92. If an error occurs in the PDF descriptor, an error message is displayed to wait for a key input. Therefore, a user corrects the descriptor, depresses the "display" icon to confirm the display, and then depresses the "confirmation" icon, thereby finishing the PDF change mode.

When the "cancel" key F10 or the end key is depressed, the batch registration processing is finished, the batch registration/registration task screen (Fig. 11) is closed, and the batch registration/mode set screen (Fig. 10) is returned.

Registration execution (F1 to F3) will be described below. The "page registration execute" key F1 has a function of registering an input object corresponding to each page of a document to be registered in units of materials (pages). This function is effective to stop continuous registration automatically performed by the "document registration execute" key F2 or "automatic registration execute" key F3 to be described later and to register input objects while displaying and confirming them on the input object display window 91 one after another.

When the "page registration execute" key F1 is depressed, a message "optical disk registration is being executed" is displayed, data displayed in the input object display window 91, i.e., an input object designated by the input object pointer d in the input object list 92 is registered in the optical disk 19, and a line of the registered input object is highlighted by means of, e.g., a halftone display in order to indicate "registered". The pointer d is moved to the next input object in the list 92, and this designated input object is read out and displayed in the window 91. These are a series of processing tasks of the "page registration execute" key F1.

When the first input object in the list 92 is designated by the pointer d, a title displayed in the title list 90 is added, and then registration of the first page of a document to be registered is executed.

When the last page of the input object in the list 92 is designated by the pointer d, registration of the last page of a document to be registered is executed. Thereafter, title correction processing is performed for the document only when the "title change" key F4 or the "next title list" key F5 is executed during the registration processing of this document.

When "No" of the input picture display is selected in a series of processing tasks of the "page registration execute" key F1, the content of an input object is not displayed, thereby increasing a speed of the registration processing.

By the "document registration execute" key F2, input object data constituting one document described in the PDF are automatically, continuously registered, and a title is added to this document. That is, processing in which an input object displayed in the input object list 92 on the batch registration/registration task screen (Fig. 11) is read out from a designated device and registered in the optical disk 19 is automatically executed throughout one document. Note that the processing can be stopped during execution by depressing a predetermined key. In addition, the processing can be continuously restarted after it is stopped.

When the key F2 is depressed, displays of the respective function keys on the batch registration/registration task screen (Fig. 11) are updated from those shown in Fig. 14A to those shown in Fig. 14D (the key F10 functions as a "stop" key), and a title displayed in the title list 90 is added to a document to be registered. A message "optical disk registration is being executed" is displayed, and the first input object displayed in the input object list 92 is read out from a designated device and registered in the optical disk 19. A line of the registered input object is highlighted by means of, e.g., a halftone display in order to indicate "registered". After the input object pointer d is moved to the next input object, the designated next input object is read out and displayed in the input object display window 91. Subsequently, an input object designated by the pointer d is read out from a designated device and registered in the optical disk 19. A series of these processing tasks are executed for all the input objects displayed in the input object list. Each input object corresponds to a page of a document. When registration of all pages of one document is finished, a "registered" mark is recorded for a registered document on a title descriptor read out from the TDF so that the registered document can be distinguished from a nonregistered document. Thereafter, the displays of the respective function keys are returned to the original states, and a series of processing tasks are finished.

When the "stop" key F10 shown in Fig. 14D is depressed during execution of "document registration", after registration processing of a page currently being registered is finished, a line of the corresponding input object is highlighted by means of, e.g., a halftone display in order to indicate "registered". The "document registration execute" key F2 is updated to the "document registration continuous execute" key F2, and the input object pointer d is moved to the next input object. Thereafter, the designated next input object is read out and displayed in the input object display window 91, and an input from an operator is waited. In this state, arbitrary functions of the keys F4 to F10 are effective, and the "page registration execute" key F1, the "automatic registration continuous execute" key F2, the "automatic registration execute" key F3, a next document key, and an end key are available. When the "page registration execute" key F1 is selected after "document registration execute" is stopped, the above-mentioned page registration is executed, and the "document registration continuous execute" key F2 is returned to the "document registration execute" key F2.

When the "document registration continuous execute" key F2 is selected after "document registration execute" is stopped, execution of document registration is continuously restarted from an input object designated by the input object pointer d in the input object list 92. When processing of the document is completely finished, the "document registration continuous execute" key F2 is returned to the "document registration execute" key F2.

When the next document key is selected after "document registration execute" is stopped, the title correction processing is performed for a document only when the "title key change" key F4 or the "next title list" key F5 is executed. In this processing, registration processing of this document is forcibly finished, and the screen is updated for the next document. That is, a title to be added to a document to be registered next is read out from the TDF and displayed in the title list 90 on the batch registration/registration task screen. A descriptor of the PDF is interpreted, and an input object corresponding to each page of the document is displayed in the input object list 92. Since the input object pointer d designates the first input object in the list 92, this input object is displayed in the input object display window 91. The "document registration continuous execute" key F2 is returned to the "document registration execute" key F2.

By the "automatic registration execute" key F3, all the input objects corresponding to pages constituting the document are automatically, continuously registered from an object to be registered designated by the pointer d in the list 92. All of documents from this document in the descriptor of the PDF are also automatically, continuously registered.

When the "automatic registration execute" key F3 is depressed, displays of the respective function keys on the batch registration/registration task screen (Fig. 11) are updated from those shown in Fig. 14A to those shown in Fig. 14D. The key F10 functions as a "stop" key, and an input object designated by the pointer d in the input object list 92 is registered in the optical disk 19. When the pointer d is located at the start of the list 92, a title displayed in the title list 90 is added to a document to be registered. A line of the registered input object is highlighted by means of, e.g., a halftone display in order to indicate "registered". After the pointer d is moved to the next input object, an input object designated by the pointer d is read out from a designated device and displayed in the input object display window 91. After a series of processing tasks are executed for input objects of one document in accordance with the descriptor in the PDF, a title to be added to the next document is automatically read out from the TDF and displayed in the title list 90. In addition, a descriptor relating to input objects of one document is read out from the PDF and displayed in the input object list 92, thereby continuously executing registration of this document. On the title descriptor read out from the TDF, a "registered" mark is recorded for a registered document to distinguish the registered document from a nonregistered document. Automatic title addition for a document to be registered and continuous registration of input objects corresponding to pages constituting the document are similarly, automatically executed to the end of the descriptors in the TDF and PDF in accordance with the descriptors.

When the "stop" key F10 shown in Fig. 14D is depressed during execution of "automatic registration", after registration processing of a page currently being registered is finished, a line of the input object is highlighted by means of a halftone display in order to indicate "registered". The "automatic registration execute" key F3 is updated to the "automatic registration continuous execute" F3, and the input object pointer d is moved to the next input object. Thereafter, the designated next input object is read out and displayed in the window 91, and an input from an operator is waited. In this state, arbitrary functions of the keys F4 to F10 are effective, and the "page registration execute" key F1, "document registration execute" key F2, the "automatic registration continuous execute" key F3, the next document key, and the end key are available.

When the "page registration execute" key F1 and the "document registration execute" key F2 are selected after "automatic registration execute" is stopped, the above-mentioned page registration and document registration are executed, and the "document registration continuous execute" key F3 is returned to the "document registration execute" key F3.

When the "automatic registration execute" key F3 is selected after "automatic registration execute" is stopped, automatic registration is continuously restarted from an input object designated in the input object list 92 by the input object pointer d. That is, automatic title addition for a document to be registered and continuous registration of input objects corresponding to pages constituting the document are automatically executed to the end of the descriptors in the TDF and PDF in accordance with the descriptors, and the "automatic registration continuous execute" key F3 is returned to the "automatic registration execute" key F3.

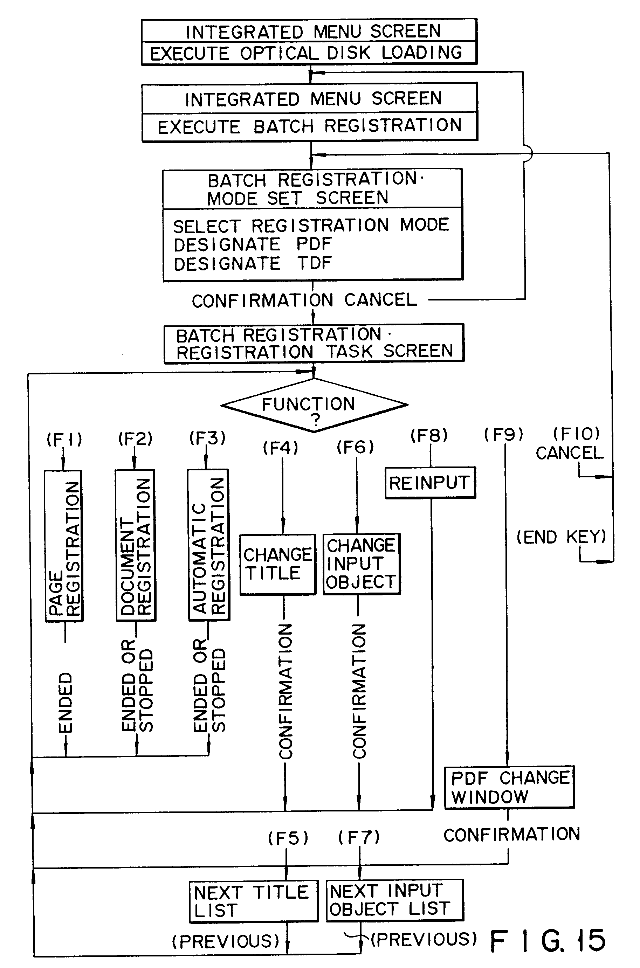

An operation of batch registration will be described below with reference to a flowchart shown in Fig. 15.

The optical disk 19 as a registration destination is set, and loading/unloading is selected on the integrated menu screen of the CRT display unit 24 shown in Fig. 9. When the "execute" key F9 is depressed, optical disk loading processing is executed and the integrated menu screen is restored. In this case, if batch registration is selected and the "execute" key 110 F9 is depressed, the batch registration/mode set screen shown in Fig. 10 is displayed.

The floppy disk 28b storing PDFs is set, and the file name list display key F4 86 is depressed to display file names in the disk 28b in the file name list 82. One PDF is picked from the list, and a "PDF name" on the screen is picked, thereby displaying the PDF name selected from the list 82 at the right side of the "PDF name" on the screen. After the file name is confirmed. the "PDF designate" key F2 84 is depressed. Upon depression of the key F2 84, the PDF is read out from the disk 28b and copied on the magnetic disk 27a.

The floppy disk 28b storing TDFs is set, and the key F4 86 is depressed to display file names in the disk 28b in the list 82. One TDF is selected from the list, and a "TDF name" on the screen is picked, thereby displaying the TDF name selected from the list 82 at the right side of the "TDF name". After the file name is confirmed, the "TDF designate" key F3 85 is depressed. Upon depression of the key F3 85, the TDF is read out from the disk 28b and copied on the magnetic disk 27a.

After the PDF and TDF are prepared as described above, the "confirmation" key F1 87 is depressed to display the batch registration/registration task screen (Fig. 12). A cabinet name of the loaded optical disk 19 is displayed in the registration destination information, the designated TDF name and a title to be added to a document to be registered first are displayed in the title list 90, the designated PDF name and an input object corresponding to each page of the first document to be registered are displayed in the input object list 92, and the first input object in the list 92, i.e., picture data currently designated by the input object pointer d is displayed in the input object display window 91.

In this manner, batch registration is started. Two examples of the PDF descriptor will be described below to explain corresponding operations and internal processing sequences.

### Typical Example

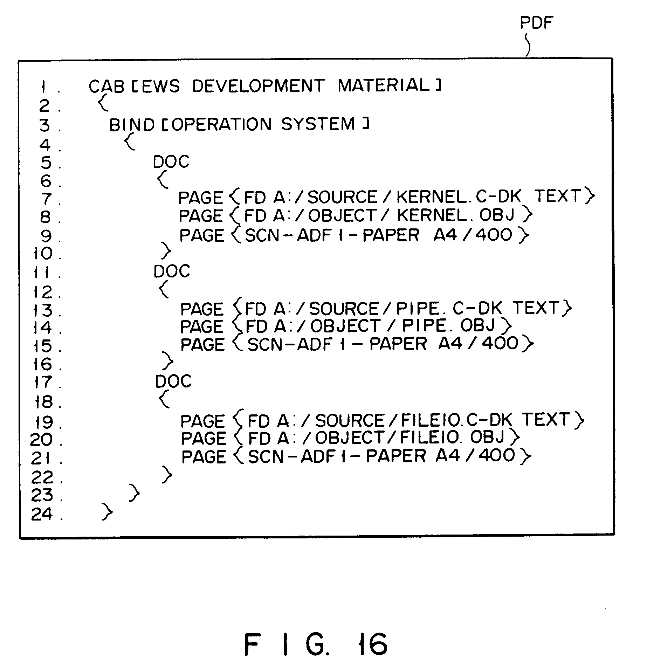

How the PDF contents are reflected on an actual registration task will be described below. For example, assume that a user is going to execute "PDF batch registration" by using a PDF shown in Fig. 16. In this case, the user designates a PDF name on the batch registration/registration mode set screen (Fig. 10) to display the registration task screen (Fig. 11). As a result, as described above, the contents of the designated PDF are analyzed and reflected on the screen as follows. First, a registration cabinet name ("EWS development material") and a binder name ("operating system") designated by the PDF are displayed in the registration destination information area, and an error message is displayed on the screen if the designated cabinet name differs from a cabinet name actually loaded in the apparatus. In addition, input objects corresponding to the first document in the contents of the PDF are displayed in the "input object list" 92. Fig. 16 shows a part of the list. The list 92 has items "No.", "input device", and "object designation" in which an input object number, a device name for reading the input object, and a name and an attribute of the input object are described, respectively.

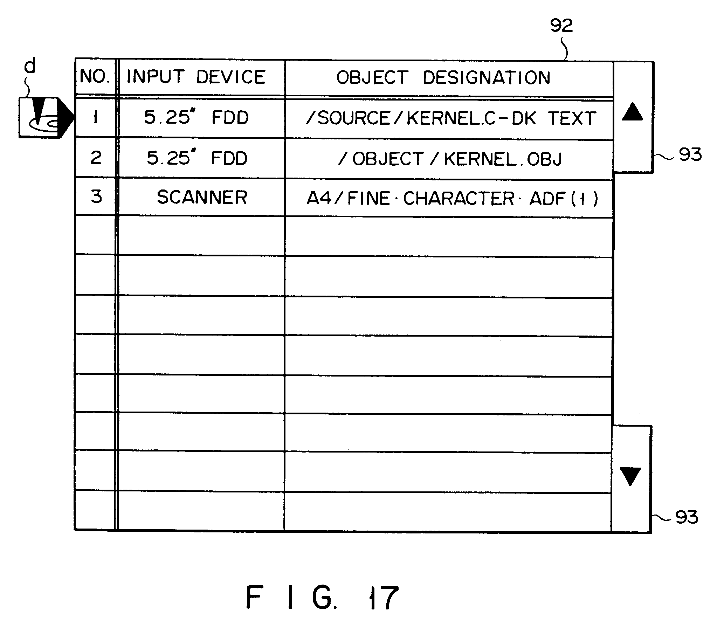

In this PDF (Fig. 16), in the first document, i.e., in a portion surrounded by the first "DOC {...}", three types of input objects are designated, and each object forms one page. A file named "KERNEL.C" is designated as a data type of text from a "SOURCE" subdirectory in the floppy disk 28a loaded in the A drive (e.g., a 5.25" FDD) of the floppy disk unit 28. Subsequently, a file called "KERNEL. OBJ" is designated from an "OBJECT" subdirectory in the floppy disk 28a in the unit 28. The third item designates that an ADF (automatic document feeder) is activated from the scanner 20 to read a character picture of an A4-size image picture in a fine mode. The above input object information is displayed in the "input object list" 92. Fig. 17 enlarges this list. Input object numbers are 1 to 3, and input device names "5.25" FDD", "5.25" FDD", and "scanner" correspond to the numbers in this order. Object designation displays "/SOURCE/KERNEL.C-DK TEXT", "/OBJECT/KERNEL.OBJ", and "A4/Fine.Character.ADF(1)" from 1 to 3. The input object pointer d is displayed at the left side of an input object displayed as the first item of registration. The pointer d represents that when registration is executed, this input object is registered in the optical disk 19 first.

When the designated disk 28a is not loaded in the unit 28 or the designated file is not present in the loaded disk 28a, an error message is displayed on the screen to show this information to a user.

In this example, since the "PDF batch registration" mode is set and no TDF is present, the user depresses the title change key F4 for the document title information area, and a text is arbitrarily input from the keyboard 23.

When the "cancel" key is depressed on this screen, the registration mode set screen is restored to enable designation of a PDF and TDF again.

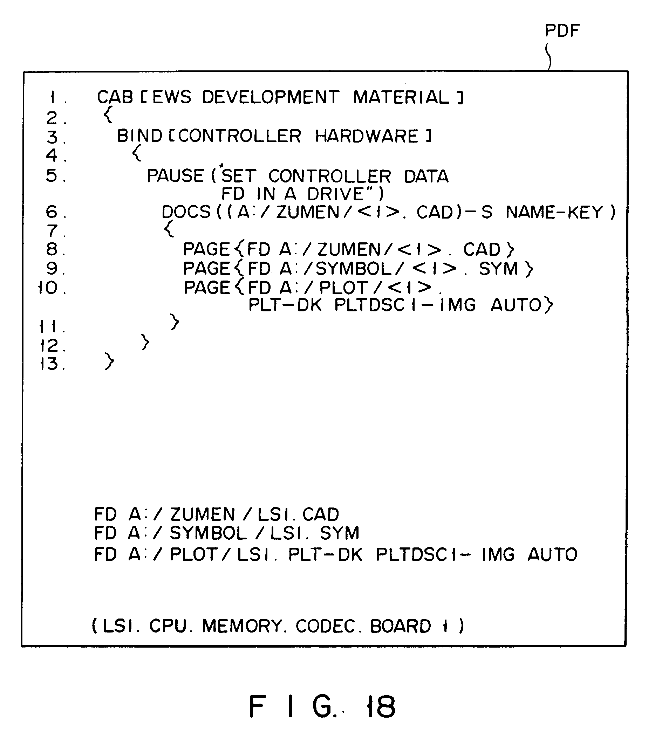

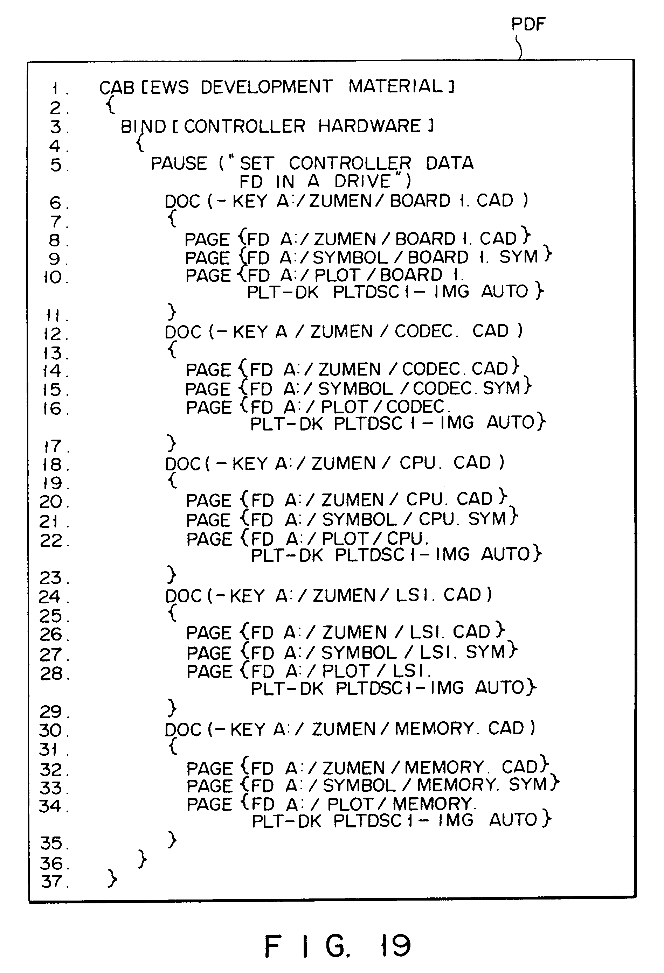

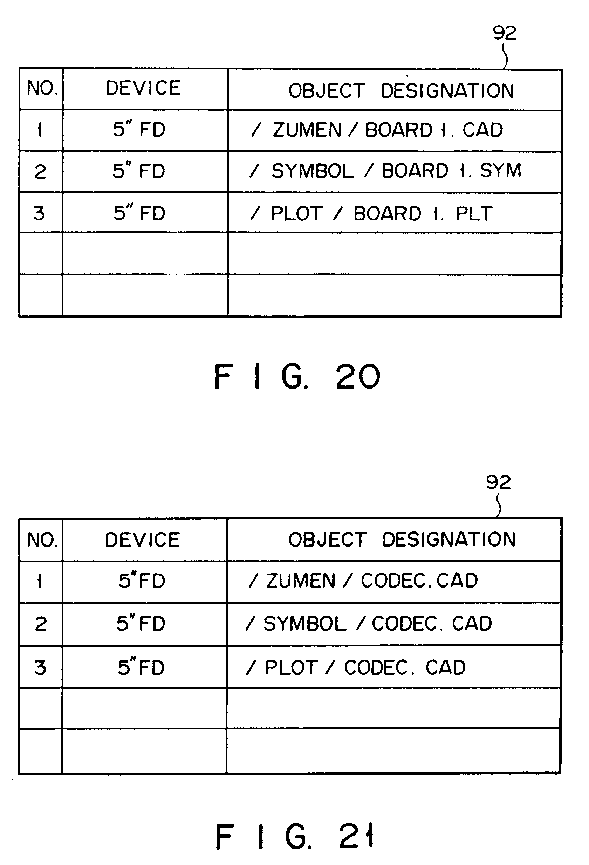

Another example of the PDF is shown in Fig. 18. A plurality of input objects are actually designated by a descriptor of one line. A PDF descriptor (Fig. 19) is obtained by interpreting/developing the PDF descriptor (Fig. 18). When the batch registration/registration task screen (Fig. 11) appears, a cabinet name "EWS development material" and a binder name "controller hardware" described in the PDF shown in Fig. 19 are displayed, and a message "set controller data FD" subsequent to PAUSE is displayed. After an operator confirms and responds, a part from DOC in the PDF is interpreted and displayed in the input object list 92 on the batch registration/registration task screen (Fig. 11) as shown in Fig. 20. When the "next input object" key F7 is depressed prior to execution of registration in order to confirm information concerning input objects described in the PDF, the descriptors in the PDF are further interpreted, updated from those shown in Fig. 20 to those shown in Fig. 21, and then displayed in the input object list 92. In order to return the relationship with respect to the title list 90, the "next input object" key F7 is depressed while the function select key is kept depressed.

When the title displayed in the title list 90, the input object displayed in the input object list 92, and "Yes" in the item 93 for displaying input information are selected on the batch registration/registration task screen (Fig. 11), the contents displayed in the input object display window 91 are confirmed, and the "automatic registration execute" key F3 is depressed. As a result, displays of the respective function keys are updated from those shown in Fig. 14A to those shown in Fig. 14D, and "optical disk registration is being executed" is displayed in a lower portion of the screen, thereby starting registration processing. In the registration processing, the title displayed in the list 90 is added to a document to be registered, and the input objects displayed in the list 92 are sequentially read out from a designated device as pages of the document and registered in the optical disk 19. When all pages of the document are completely registered in accordance with the descriptor of the PDF, a title to be added to the next document and a descriptor concerning input objects of one document are automatically read out from the TDF and PDF and displayed in the lists 90 and 92, respectively, thereby successively executing registration.

After the registration processing is normally executed for all documents described in the PDF, "optical disk registration is being executed" is switched to "automatically registered", and displays of the respective function keys are returned to the original states (Fig. 14A).

If a portion requiring correction is found in the titles displayed in the title list 90 during continuous registration, the "stop" key F10 (Fig. 14D) is depressed. The registration processing is interrupted when processing for a page currently being registered is finished, "interrupted" is displayed in the lower portion of the screen, and the displays of the respective function keys are returned to the original states (Fig. 14A). Note that the key F3 functions as the "automatic registration continuous execute" key. At this time, a portion highlighted by means of, e.g., a halftone display appears in the input object list 92 on the batch registration/registration task screen (Fig. 11) in order to clearly display an input object already registered upon interruption, and the input object pointer d for designating an input object to be registered next designates the first input object of a nonregistered portion.

In order to perform title correction, the "title change" key F4 is depressed, and the arrow keys are used to move the character cursor appearing in the title list 90 to a portion to be changed. A title value for correction is input from the keyboard 23, and the "confirmation" key F1 is depressed.

In order to restart the "automatic registration" processing from the interrupted portion after the title is changed, the "automatic registration continuous execute" key F3 is depressed. As a result, the registration processing is continuously performed from an input object designated by the input object pointer d in accordance with the descriptor in the PDF.

When a portion requiring correction is found in the input objects displayed in the input object list 92 during continuous registration, the "stop" key F10 (Fig. 14D) is depressed. In order to change an input object, the "input object change" key F6 is depressed and the arrow keys are used to move the character cursor appearing in the list 92 to the portion to be changed (Fig. 14C). After an input for correction is supplied from the "one line insert" key F3, the "one line delete" key F4, or the keyboard 23, the "confirmation" key F1 is depressed.

In order to restart the "automatic registration" processing from the interrupted portion after the input object is changed, the "automatic registration execute" key F3 is depressed.

The batch registration task processing based on a PDF will be described in detail below.

Internal processing of the PDF interpretive processing module 52 will be described first.

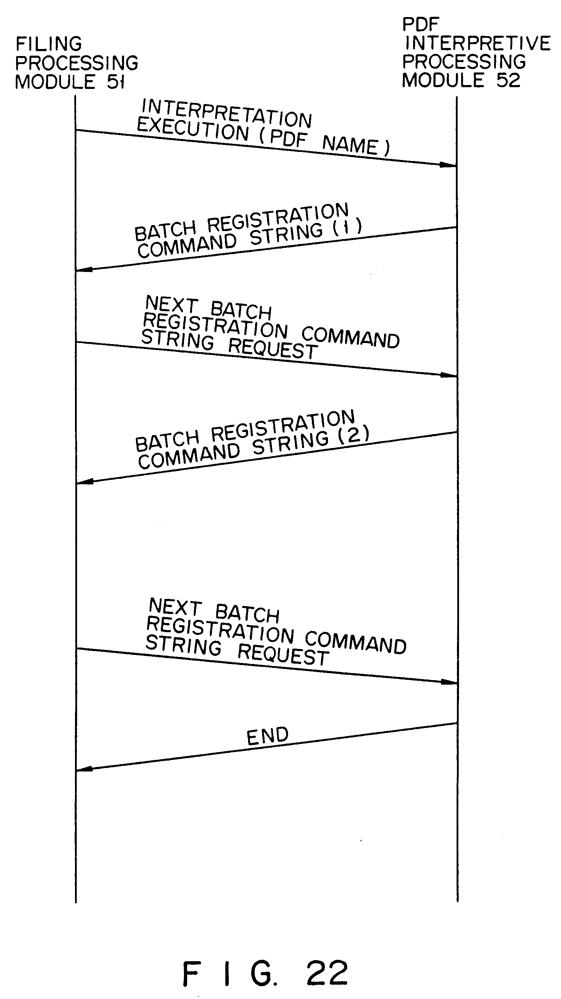

As shown in Fig. 2, the module 52 is executed in accordance with designation from the filing processing module 51. Fig. 22 shows a protocol between the modules 51 and 52. First, the filing processing module 51 designates execution of interpretation by using a PDF name as a parameter to the PDF interpretive processing module 52. Thereafter, the module 52 reads out and interprets the PDF, generates a batch registration command string, and transmits a batch registration command string (1) for the first document to the module 51. In accordance with the command string (1), the module 51 activates the I/O modules 61 to 67 to execute the batch registration processing. Thereafter, the module 51 requests a batch registration command string for the next document to the module 52, and the module 52 supplies a batch registration command string (2) to the module 51. The module 51 therefore executes batch registration processing for the next document. The above processing is repeatedly executed until the module 52 transmits an end command to the module 51.

The PDF processing module 52 waits for designation from the filing processing module 51. When an interpretation execute command is supplied from the external interface controller 102, the flow controller 101 activates the PDF reader 103. The reader 103 reads out a PDF of a name represented by a parameter upon input of the interpretation execute command and stores the readout PDF in the PDF buffer unit 104. Thereafter, the flow controller 101 activates the PDF interpreter 105. The interpreter 105 extracts the PDF from the buffer unit 104 and generates and stores batch registration command strings in the command buffer unit 106. The controller 101 then extracts a batch registration command string for the first document from the buffer unit 106 and transmits the extracted command string to the filing processing module 51 via the external interface controller 102. Thereafter, in accordance with the next batch registration command string request from the module 51, a batch registration command string for the next document is extracted from the command buffer unit 106 and transmitted to the module 51. This processing is repeated until the buffer unit 106 becomes empty.

If a PAUSE sentence exists in the PDF, the PDF interpreter 105 interrupts the command generation processing, and the filing processing module 51 is requested to display a message to be confirmed by an operator. After this processing, the interpreter 105 restarts the command generation processing.

The batch registration command generated by the PDF interpreter 105 will be described below.
(1) CAB-OPEN (cabinet name)
   A designated cabinet is opened until CAB-CLOSE.
(2) BIND-OPEN (binder name)
   A desugbated binder in a currently open cabinet is opened until BIND-CLOSE.
(3) CAB-CLOSE
   A cabinet is closed.
(4) BIND-CLOSE
   A binder is closed.
(5) NEW-DOC (title)
   A new document is formed in a currently open cabinet and binder and a designated title is added to the document.
   This document is opened until END-DOC.
(6) MOD-DOC (document number)
   A document designated by a document number in a currently open cabinet and binder is opened until END-DOC.
(7) END-DOC
   A document is closed.
(8) NEW-PAGE (registration data)
   Data described by registration data is registered as new page data in a currently open document.
   The registration data will be described in detail later.
(9) MOD-PAGE (page number, registration data)
   Data described by registration data is registered as revised page data on a designated page in a currently open document.
(10) PAUSE (message)
   A message is displayed on the CRT display unit 24 so as to be confirmed by an operator.
(11) END
   The end of a batch registration command string is represented.

These batch registration commands are generated by the PDF interpreter 105 and executed by the filing processing module 51.

Items to be described in the registration data will be described.

### (1) FD File Name [Option]

A full pass name including a device name is designated as a file name in which file data of the floppy disk 28a is registered. In the case of the "SAMPLE1.C" file in a route directory in the A drive, "A:/SAMPLE1.C" is designated. Although, a wild card can be designated as a file name in a PDF, a full pass name requested by the PDF interpreter 105 is designated for this registration data.

A drawing type option and an imaging format option described in the PDF are added to an option section. When the imaging format option is added, a picture imaged by a method designated by the drawing type option is used as registration data. If the imaging format option is not added, file data is directly used as registration data.

### (2) SCN [Option]

Picture data read out by the scanner 20 is registered. In the option section, a paper size, ADF designation, a picture attribute, and the like can be designated as in the case of the PDF.

### (3) DIR Wild Card

Directory information data in the floppy disk 28a is registered. The directory information is a list of file names satisfying conditions represented by the wild card.

Internal processing of the PDF interpreter 105 will be described in detail below.

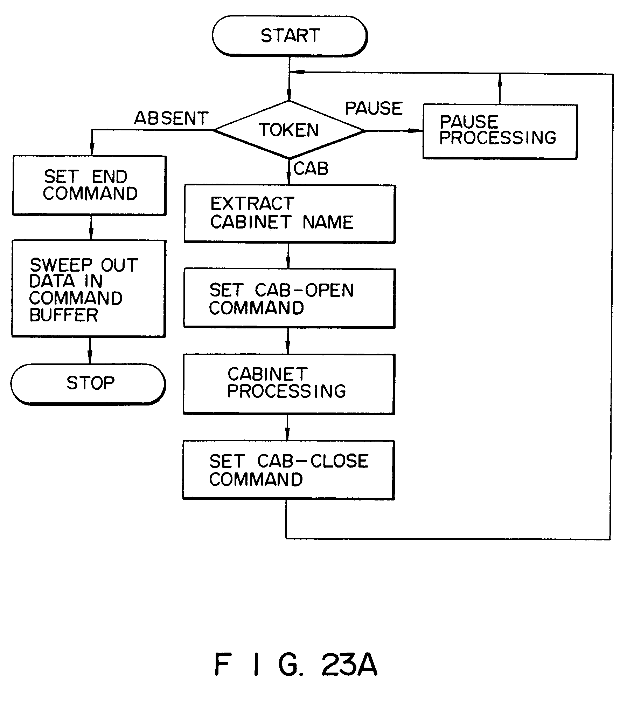

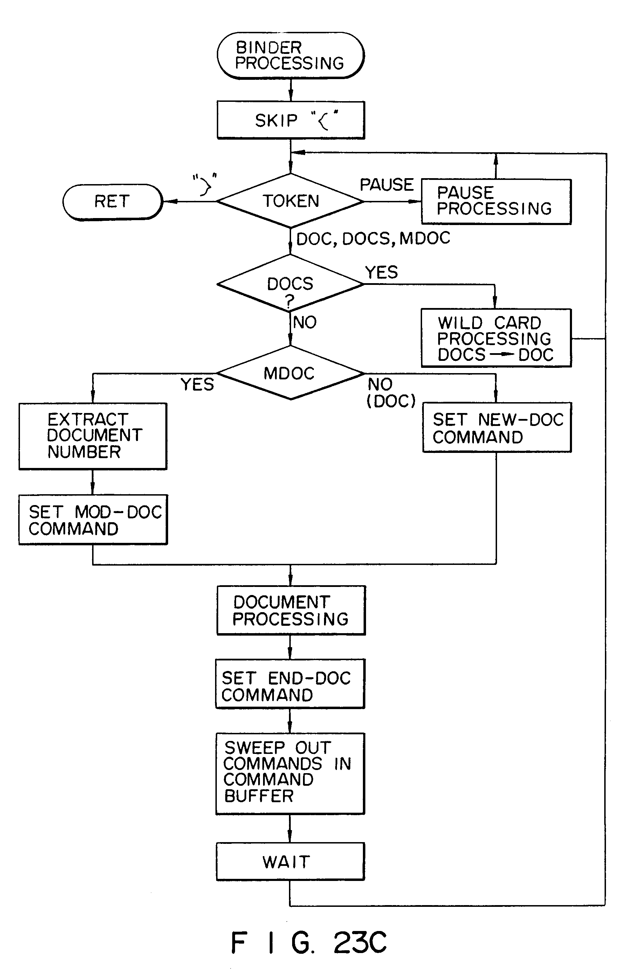

Figs. 23A to 23D show flow charts for explaining an operation of the interpreter 105.

The interpreter 105 sequentially extracts character strings stored in the PDF buffer unit 104 and generates batch registration command strings.

A character string (token) delimited by a delimiter symbol such as a space is extracted, and whether this token is "CAB", "PAUSE", or nothing is checked. If nothing is determined, an END command is set, data in the command buffer unit 106 is transferred to the filing processing module 51, and the processing is finished. If "PAUSE" is determined, PAUSE processing is executed. In the PAUSE processing, data the buffer unit 106 is transferred to the module 51, and a message character string between "(" and ")" is extracted. A PAUSE command having the extracted message as a parameter is transferred to the module 51, and a response from the module 51 is waited. When the response from the module 51 is received, the flow returns to the token extracting step.

If the token is "CAB", the following processing is executed.

First, a cabinet name sandwiched between "[", and "]" is extracted, the CAB-OPEN command is set in the command buffer unit 106, and a cabinet processing routine is called. Thereafter, the CAB-CLOSE command is set in the buffer unit 106, and the flow returns to token extracting step.

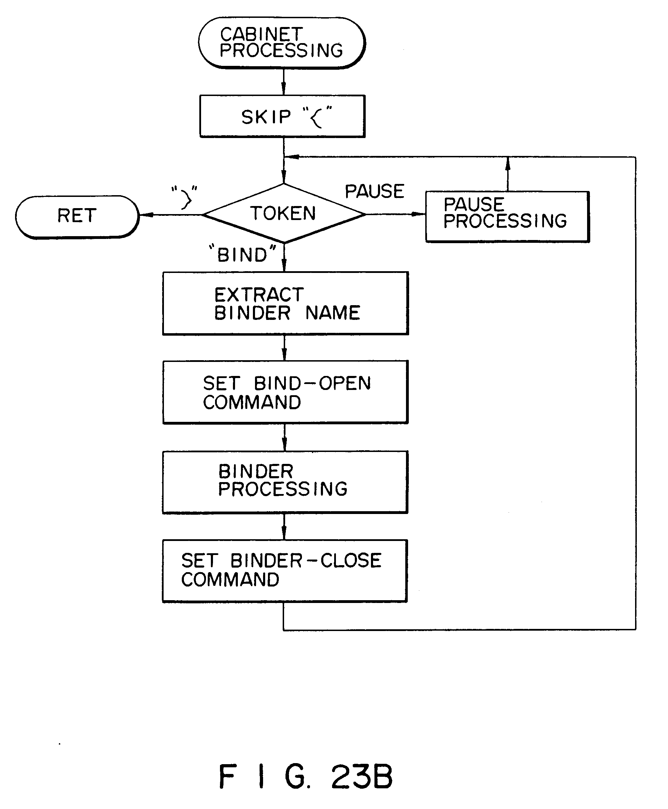

Fig. 23B is a flow chart for explaining the cabinet processing routine.

First, "{" is skipped, and the next token is extracted. If the token is "}", the flow returns. If the token is "PAUSE", the PAUSE processing is executed, and the flow returns to the token extracting step. If the token is "BIND", the following processing is executed.

A binder name sandwiched between "[" and "]" is extracted, the BIND-OPEN command is set in the command buffer unit 106, and a binder processing routine is called. Thereafter, the BIND-CLOSE command is set in the unit 106, and the flow returns to the token extracting step.

Fig. 23C is a flow chart for explaining the binder routine processing.

First, "{" is skipped, and a token is extracted. If the token is "}", the flow returns. If the token is "PAUSE", the PAUSE processing is executed, and the flow returns to the token extracting step. In other cases, the flow advances to the following processing.

If the token is "DOCS", batch registration of a series of a plurality of associated documents is designated. Therefore, a file satisfying the corresponding conditions is extracted from the floppy disk 28a, and a parameter part in the PDF descriptor in the PDF buffer unit 104 is replaced with an actual file name extracted from the floppy disk 28a. Thereafter, "DOCS" is converted into "DOC" which is a descriptor for one document, and the flow returns to the token extracting step. If the token is "DOC", the NEW-DOC command representing registration of a new document is set in the command buffer unit 106, a document processing routine is called, and the END-DOC command is set. At this time, a batch registration command string stored in the buffer unit 106 is transferred to the filing processing module 51, and a response from the module 51 is waited. After the response is received, the flow returns to the token extracting step.

If the extracted token is "MDOC", a document number sandwiched between "[" and "]" is extracted, the MOD-DOC command representing correction registration of a document is set in the buffer unit 106, and processing similar to the above processing is executed.

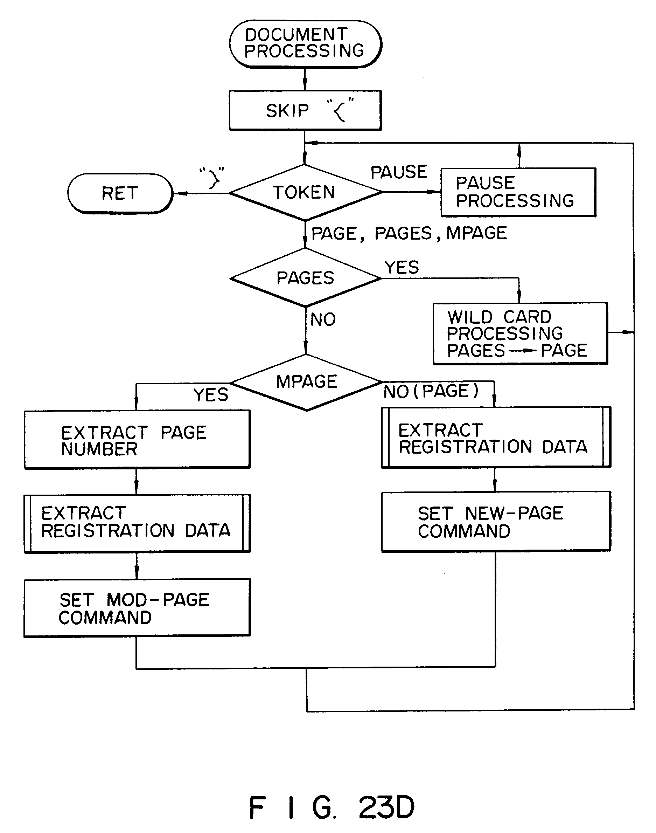

Fig. 23D is a flow chart for explaining the document processing routine.

First, "{" is skipped, and the next token is extracted. If the token is "}", the flow returns. If the token is "PAUSE", the PAUSE processing is executed. In other cases, the following processing is executed.

If the token is "PAGES", batch registration of a plurality of associated pages is designated. Therefore, a file satisfying the corresponding conditions is extracted from the floppy disk 28a, and a parameter part in the PDF buffer unit 104 is replaced with an actual file name extracted from the disk 28a. Thereafter, "PAGES" is converted into "PAGE" which is a registration descriptor for one page, and the flow returns to the token extracting step. If the token is "PAGE", registration data extracting processing is executed. The NEW-PAGE command representing new page registration having the obtained registration data as a parameter is set in the command buffer unit 106, and the flow returns to the token extracting step.

If the extracted token is "MPAGE", a page number sandwiched between "[" and "]" is extracted, and registration data sandwiched between "(" and ")" is extracted. Thereafter, the MOD-PAGE command representing revised page registration having these data as parameters is set in the buffer unit 106, and the flow returns to the token extracting processing.

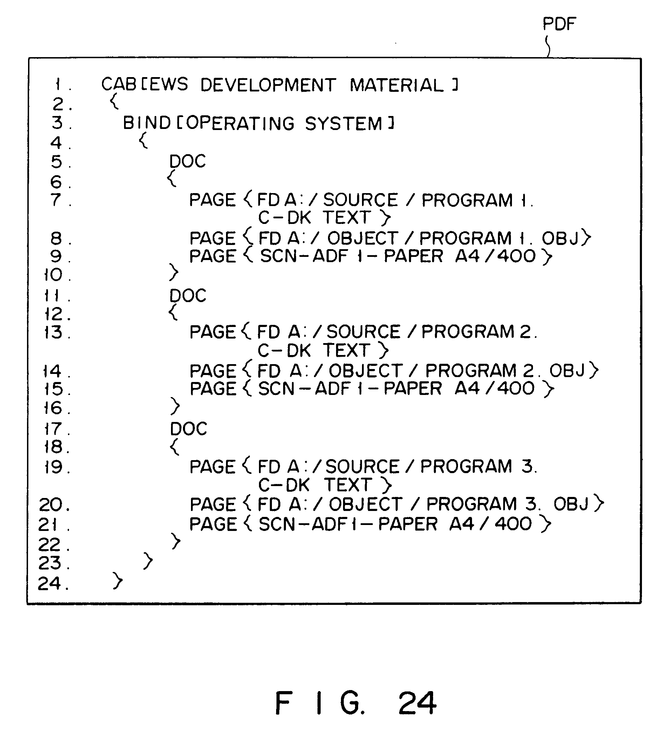

An operation of the PDF interpreter 105 will be described below with reference to a PDF shown in Fig. 24.

Assume that before the interpreter 105 starts an operation, the filing processing module 51 designates execution of interpretation, and a designated PDF is stored in the PDF buffer unit 104.

The interpreter 105 interprets the first to fifth lines, and the CAB-OPEN (EWS development material) command, the BIND-OPEN (operating system) command, and the NEW-DOC command are set in the command buffer unit 106. Thereafter, lines up to the tenth line are interpreted, and PAGE (FD A:/SOURCE/KERNEL.C-DK TEXT), PAGE (FD A:/OBJECT/KERNEL. OBJ), PAGE (SCN-ADF1PAPER-A4/400) commands and the END-DOC command are set. Batch registration command strings obtained in the above processing are transferred to the filing processing module 51, and a response from the module 51 is waited. After the response is received, the interpreter 105 interprets the 11th to 16th lines, and NEW-DOC, PAGE (FD A/SOURCE/PIPE.C-DK TEXT), PAGE (FD A:/OBJECT/PIPE.OBJ), PAGE (SCN-ADF1PAPER-AF/400), and END-DOC commands are set in the command buffer unit 106. Thereafter, these batch registration command strings are transferred to the module 51, and a response from the module 51 is waited.

After the response is received, the interpreter 105 interprets the 17th to 22th lines, and processing similar to the above processing is executed.

Thereafter, the interpreter 105 interprets the 23rd and 24th lines, and the BIND, CLOSE, CAB-CLOSE, and END commands are set in the buffer unit 106. These batch registration command strings are transferred to the filing processing module 51, and the processing is ended.

The module 51 executes the batch registration command strings, and three documents are registered in the operating system binder in the EWS development material cabinet. In addition, three pages of a source file, an object file, and picture data are registered in each document.

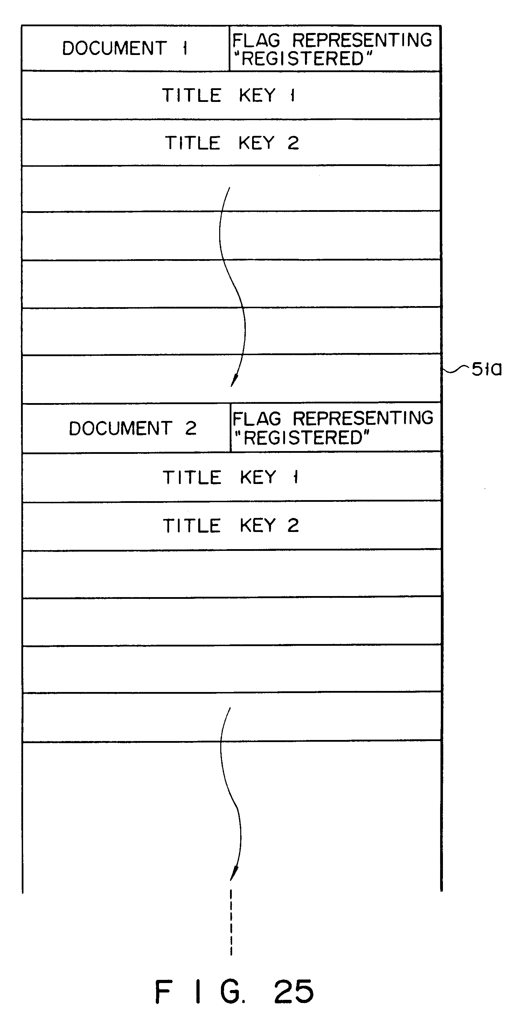

Internal processing of the filing processing module 51 will be described below. A TDF is already stored in the module 51 and internally managed in an internal table 51a shown in Fig. 25. Therefore, similar to the PDF, data in another floppy disk 28a can be read out upon execution of registration. In the internal table 51a shown in Fig. 25, a flag representing "registered" is set in registered title information and updated each time registration is executed. Even if a TDF is not present, a title information table of empty columns is formed in accordance with a title structure of a binder to be registered.

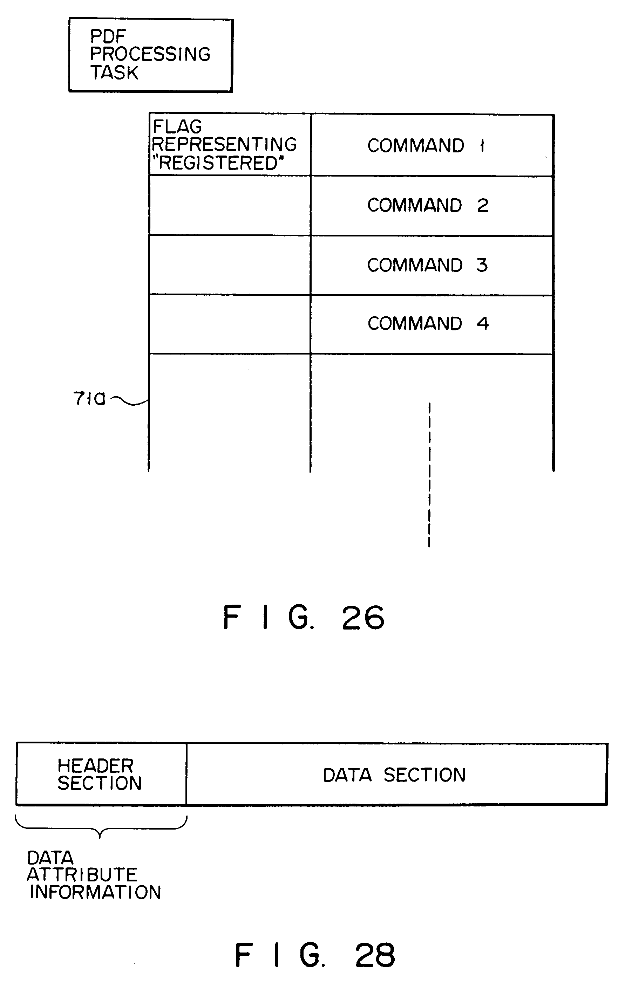

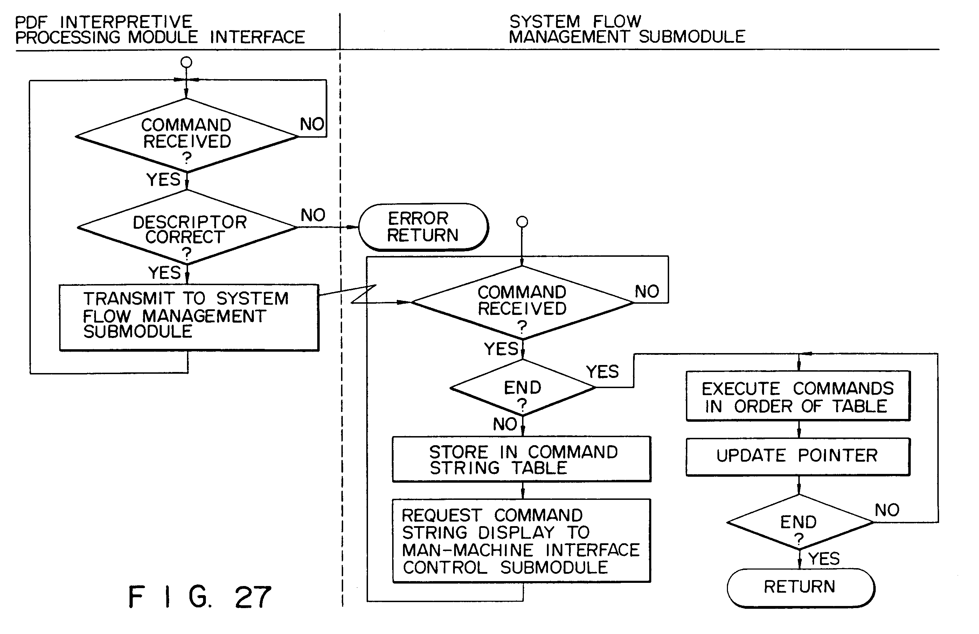

When a series of interpreted command strings are supplied from the PDF interpretive processing module 52 to the filing processing module 51, the PDF interpretive processing module interface 73 receives and transfers the command strings to the system flow management submodule 71. The submodule 71 manages an internal table 71a for PDF processing as shown in Fig. 26 and controls execution of the PDF. The submodule 71 temporarily stores a series of command strings received by the table 71a and transfers the command strings to the man-machine interface control submodule 72 as a display request in order to reflect the command strings in the input object list 92 on the registration task screen shown in Fig. 11. The system flow management submodule 71 sequentially executes the commands described in the internal table 71a. Fig. 27 shows a flow chart for explaining this processing.

An operation of each control module performed when each command is executed will be described below. Batch registration shown in Fig. 24 will be exemplified below. For the sake of clear understanding, a descriptor format shown in Fig. 24 will be described below.

In order to execute a command corresponding to "CAB[EOS development material]", an open request for a cabinet "EOS development material" is output to the data base processing module 53. When this processing is finished, this information is supplied to the system flow management submodule 71. If the processing is normally finished, a pointer is moved by one step, and the next command is executed.

In order to execute a command corresponding to "BIND[operating system]", an open request for a binder "operating system" is output to the module 53.

When "DOC" is interpreted, information representing document registration is supplied to the module 53 to open a document in the designated cabinet binder. If a document name is described, the designated document is opened. If no document name is described, a new document is registered.

The above processing is open processing for the data base processing module 53 executed upon registration.

Registration processing is then actually executed for the optical disk 19.

In this embodiment, processing associated with data registration/search is always executed via the page memory 14 or buffer memory 14a in the memory module 10.

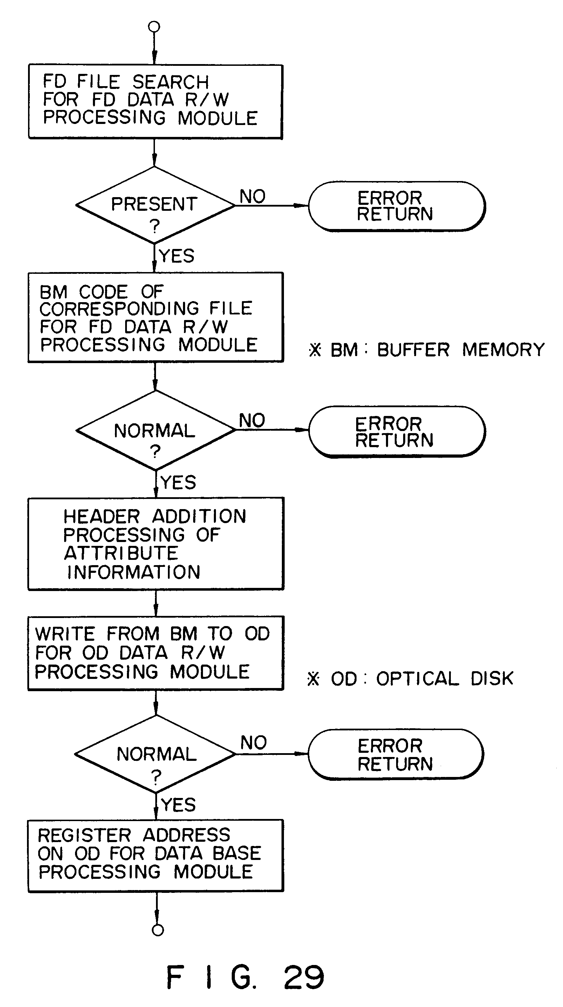

When "PAGE{FD A:/SOURCE/KERNEL.C-DK TEXT}" is interpreted, registration of data defined from { } as a page is executed. Since this descriptor describes that an input source is the floppy disk 28a, the system flow management submodule 71 causes the FD data R/W processing module 64 to search a file having a file name designated by the descriptor in the disk 28a in accordance with the corresponding directory loaded in the A drive. If a file is present, this file is loaded in the buffer memory 14a. In this embodiment, loading in the memory 14a is performed in accordance with a format shown in Fig. 28. That is, as shown in Fig. 28, a header section in which various pieces of attribute information concerning data on the disk 28a are described is added to the data and loaded in the memory 14a. In the case of data of the floppy disk 28a, its file name, an operating system name of a system which has formed the corresponding file, a volume name and a directory name of the disk 28a, and attribute information based on designation of various options described after the file name of the PAGE command correspond to the header section. In the embodiment, the first page represents the type of data designated by the -DK option. In this case, TEXT, i.e., SJ represents that the data is FD data in the descriptor.

The FD data R/W processing module 64 performs loading in accordance with a command representing that loading is to be performed with a header supplied from the system flow management submodule 71. If loading is normally finished, the submodule 71 commands the OD data R/W processing module 63 to perform write processing of the data in the optical disk 19. The module 63 reads out the corresponding data from the buffer memory 14a and writes the readout data in the disk 19. If the processing is normally finished, the module 63 returns a write address on the disk 19, and the submodule 71 supplies this information to the data base processing module 53.

Data transfer from the floppy disk 28a to the buffer memory 14a or from the buffer memory 14a to the optical disk 19 is executed by a data transfer means (not shown) on the interface circuit 17, e.g., direct access memory transfer hardware via the system bus 41.

Fig. 29 is a flow chart for explaining the above processing.

In this case, if "Yes" is designated in the "input object display" column 93 shown in Fig. 11, an operation after the FD data loading processing slightly differs. When the FD data as an object can be displayed, the system flow management submodule 71 supplies a request for displaying the data on the buffer memory 14a to the display control processing module 66. The module 66 supplies a command for executing drawing processing to the drawing processing module 67 in order to interpret and draw the contents of data. The module 67 interprets and draws the FD data in a corresponding area in the display memory 15. After the drawing processing is finished, write processing is performed for the optical disk 19.

When the above processing is normally finished, the flow advances to the next step. The next step is also registration of the floppy disk 28a and similarly executed.

Since "SCN" is defined in "PAGE", i.e., an input picture from the scanner 20 is to be registered, the system flow management submodule 71 outputs a scanner input request to the picture I/O processing module 62. In this case, options of "-ADF2" and "-PAPER A4/400" are added to the PDF descriptor. Therefore, upon this request, conditions that an ADF input is performed for one page with A4-size pixel density of 400 dpi are designated. In accordance with this designation, the scanner interface 37 is operated to drive the scanner 20, thereby supplying and temporarily storing the picture in the page memory 14. Similar to the case of the FD data, if the input picture is to be displayed upon registration, a display request is output to the display control module 66 when input of the scanner 20 is finished. If the module 66 determines that the requested data is image data, data in the page memory 14 is transferred to the display memory 51. At this time, in order to match sizes of the both data, the enlarging/reducing circuit 34 and the row/column converter 35 execute processing for obtaining an arbitrary size and 90°-rotating processing, respectively. That is, the circuit 34 or converter 35 reads out scanner-input picture data from the page memory 14 via the image bus 42, internally performs conversion processing, and writes the data in the display memory 15 via the image bus 42.

The system flow management submodule 71 outputs a command for performing write processing of the picture data in the optical disk 19 to the OD data R/W processing module 63. If the object data is image data, the module 63 compression-encodes and registers the image data in the optical disk 19 in accordance with designation of an option. That is, the data is read out from the page memory 14 to the CODEC 36 via the image bus 42, encoded by the CODEC 36, and transferred to the buffer memory 14a. At this time, the module 63 performs processing for adding a header with the format shown in Fig. 28 to the encoded data stored in the memory 14a if necessary. In this case, attribute information includes information concerning registered options described on the PDF such as a picture size and density.

The module 63 reads out the data from the memory 14a and writes the readout data in the optical disk 19. This data transfer is performed by the data transfer means (not shown) on the interface circuit 17. After the write processing for the optical disk 19 is finished, the module 63 sends back a write address on the optical disk 19, and the system flow management submodule 71 supplies this information to the data base processing module 53.

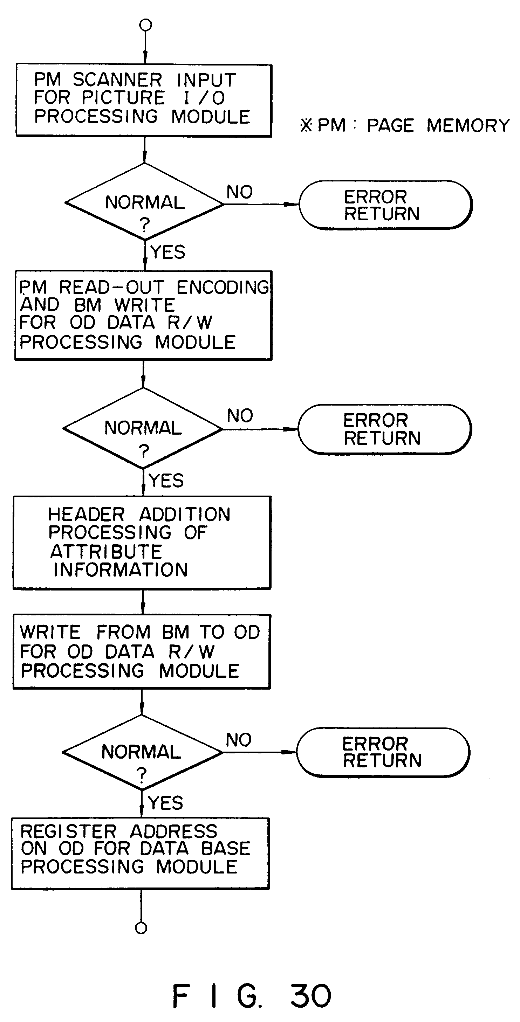

Fig. 30 is a flow chart for explaining the above processing. The flow shown in Fig. 30 is executed when data is not displayed.

Since registration of one document is completed when the above processing is finished, the system flow management submodule 71 registers the last title key information managed therein, i.e., title key information which may be partially modified in accordance with an automatic title addition option or the like in the data base processing module 53, thereby performing close processing for this document. Thereafter, a flag representing "registered" is switched on at the current registered document in the internal table 51a shown in Fig. 25, and the pointer is updated by one document, thereby repeating the above processing.

In the above processing, the results of the respective steps are sequentially displayed on the screen as described above. For this reason, each time one page or one document is registered, the system flow management submodule 71 supplies an update request and new display data to the man-machine interaction control submodule 72. The submodule 72 updates the display by using the display control processing module 66 and the drawing processing module 67.

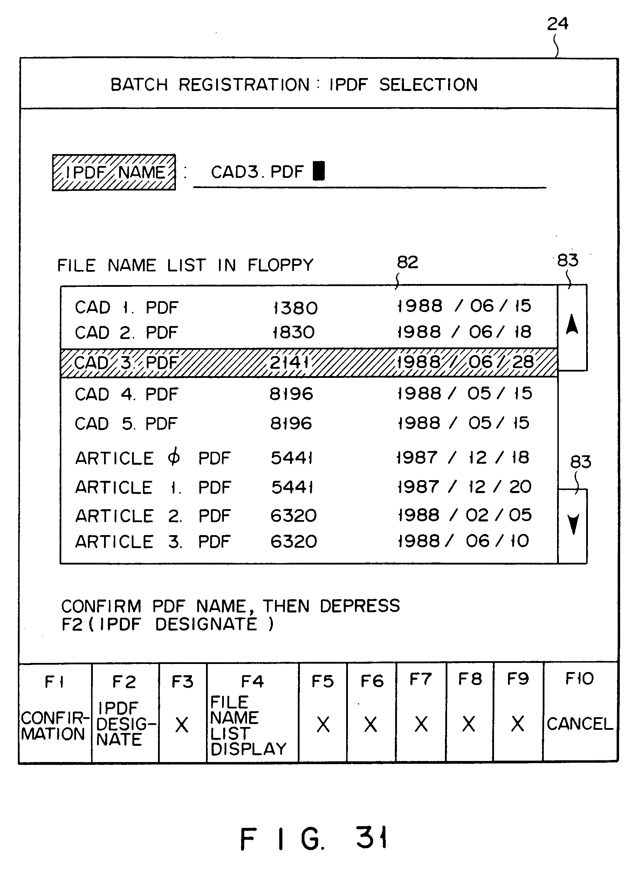

A modification of the present invention will be described. In the above embodiment, a PDF and TDF are independently designated as different files on the basis of the operation specification shown in Fig. 10. Alternatively, the registration processing is executed by using only a PDF. In the following modification, a single file is used as both a PDF and TDF so that a procedure descriptor of the PDF and title information of each document are described in the single file. This file is called an integrated procedure descriptor file (IPDF). In this case, a batch registration mode designation screen on the CRT display unit 24 is as shown in Fig. 31. That is, not a registration mode but only a file IPDF is designated.

When a file is designated, PDF and TDF parts are independently managed, and the same processing as the above flow is performed. Advantages of these different operations will be summarized below.

### (a) PDF Only

This operation is effective in processing in which only a title is registered beforehand and data is registered later.

### (b) PDF and TDF

A title and data are simultaneously registered. Since the PDF and TDF are different, processing can be flexibly performed by combining the PDF and TDF in various ways. For example, different titles can be registered by the same procedure, or the same title can be registered by different procedures.

### (c) IPDF

A title and data are simultaneously registered. Total management of a title and a procedure can be performed.

This modification can be easily realized by modifying processing upon IPDF selection without changing hardware and software arrangements.

In the above embodiment, the batch registration procedure descriptor file, the title information descriptor file, and the code data file are recorded in different floppy disks. However, the present invention is not limited to the above embodiment. For example, these files may be recorded in different areas of a single floppy disks.

In addition, in the above embodiment, a floppy disk is used as the magnetic storage means. However, another magnetic storage medium can be used.

## Claims

1. A data storage device, wherein a plurality of storage data items, are stored, in batch, in an optical storage medium (19), storage data item along with a title and a keyword, said device comprising supply means (20, 28a) for supplying storage data, first storing means (63) for storing the storage data supplied from said supply means (20, 28a) into said optical storage medium (19) in accordance with a management system consisting of a plurality of hierarchical structures such as documents and pages for managing the storage data, and designating means (23, 29),
characterized in that:
- reading means (52) read, from a magnetic storage medium (28b, 27a), data representing storage procedures for storing the storage data items into said optical storage medium (19);
- said designating means (23, 29) designate a desired procedure from among a plurality of storage procedures, to be read by said reading means (52); and
- second storing means (51) store the storage data from said supply means (20, 28a) by said first storing means (63) into said optical storing medium (19) in response to said storage procedure designated by said designating means (23, 29).

2. A device according to claim 1, characterized in that said designating means (23, 29) designate a desired procedure of registration processing for one document in units of pages, all pages of one document, or all pages of a plurality of documents.

3. A device according to claim 1, characterized in that said designating means (23, 29) designate a change in desired storage procedure, changing means (51) change the storage procedure stored in said magnetic storage medium (28b, 27a) in response to a change content designated by said designating means (23, 29), and said second storing means (51) store the storage data from said supply means (20, 28a) by said first storing means (63) into said optical storage medium (19) in accordance with the storage procedure changed by said changing means (51).

4. A device according to claim 1, characterized in that said designating means (23, 29) designate a display of registered contents for another document; a display unit (24) displays registered contents of each document to be batch-registered; and displaying means (16) display the registered contents for another document designated by said designating means on said display unit (24).

5. A device according to claim 1, characterized in that said designating means (23, 29) designate a change in order of storage procedures upon batch registration performed, and said second storing means (51) store the storage data supplied from said supply means (20, 28a) by said first storing means (63) into said optical storage medium (19) in accordance with the storage procedure changed by said designating means (23, 29).

6. A device according to anyone of claims 1 to 5, characterized in that said supply means (20, 28a) comprises a two-dimensional scanning unit (20) or a floppy disk (28a).

7. A device according to anyone of claims 1 to 5, characterized in that said magnetic storage medium (28b) comprises a floppy disk (28b) or a magnetic disk (27a).

8. A device according to anyone of claims 1 to 5, characterized in that said reading means (52) comprises a batch registration procedure file interpretive processing module (52).

9. A device according to anyone of claims 1 to 5, characterized in that said designating means (23, 29) comprises a keyboard (23) or a mouse (29).

10. A device according to anyone of claims 1 to 5, characterized in that said second storing means (51) comprises a filing processing module (51).

## Patentansprüche

1. Datenspeichervorrichtung, in der eine Vielzahl von zu speichernden Datenelementen stapelweise in einem optischen Speichermedium (19) gespeichert sind, jeweils ein zu speicherndes Datenelement zusammen mit einem Titel und einem Schlüsselwort, wobei diese Vorrichtung folgendes umfaßt: eine Eingabeeinrichtung (20, 28a) zur Übergabe von zu speichernden Daten, eine erste Speichereinrichtung (63) zur Speicherung der von der Eingabeeinrichtung (20, 28a) gelieferten in diesem optischen Speichermedium (19) zu speichernden Daten gemäß einem aus einer Vielzahl hierarchischer Strukturen, wie Dokumenten und Seiten, bestehenden Datenverwaltungssystem zur Verwaltung der Speicherdaten und eine Befehlseinrichtung (23, 29), dadurch gekennzeichnet, daß
- eine Leseeinrichtung (52) Daten von einem magnetischen Speichermedium (28b, 27b) ausliest, welche Speicherungsprozeduren zur Abspeicherung der zu speichernden Datenelemente in diesem optischen Speichermedium (19) darstellen;
- die Befehlseinrichtung (23, 29) eine gewünschte Prozedur aus einer Vielzahl von Speicherungsprozeduren zum Auslesen durch diese Leseeinrichtung (52) festlegt;
- eine zweite Speichereinrichtung (51) die von der Eingabeeinrichtung (20, 28a) an die erste Speichereinrichtung (63) zur Speicherung in diesem optischen Speichermedium (19) gelieferten zu speichernde Daten entsprechend der von der Befehlseinrichtung (23, 29) festgelegten Speicherungsprozedur speichert.

2. Vorrichtung gemäß Anspruch 1, dadurch gekennzeichnet, daß die Befehlseinrichtung (23, 29) eine gewünschte Prozedur zur Registrierungsverarbeitung für ein Dokument in Einheiten von Seiten, sämtlichen Seiten eines Dokuments oder sämtlichen Seiten einer Vielzahl von Dokumenten festlegt.

3. Vorrichtung gemäß Anspruch 1, dadurch gekennzeichnet, daß die Befehlseinrichtung (23, 29) eine Änderung der gewünschten Speicherungsprozedur festlegt, eine Änderungseinrichtung (51) die im magnetischen Speichermedium (28b, 27a) gespeicherte Speicherungsprozedur entsprechend einem von der Befehlseinrichtung (23, 29) festgelegten Änderungsinhalt ändert, und die zweite Speichereinrichtung (51) die von der Eingabeeinrichtung (20, 28a) an die erste Speichereinrichtung (63) zur Speicherung in diesem optischen Speichermedium (19) gelieferten zu speichernden Daten gemäß der von der Anderungseinrichtung (51) geänderten Speicherungsprozedur speichert.

4. Vorrichtung gemäß Anspruch 1, dadurch gekennzeichnet, daß die Befehlseinrichtung (23, 29) eine Anzeige des registrierten Inhalts eines anderen Dokument anfordert; eine Anzeigeeinheit (24) den registrierten Inhalt jedes stapelweise zu registrierenden Dokuments anzeigt; und eine Anzeigeeinrichtung (16) den registrierten Inhalt eines anderen durch die Befehlseinrichtung über diese Anzeigeeinheit (24) angeforderten Dokuments anzeigt.

5. Vorrichtung gemäß Anspruch 1, dadurch gekennzeichnet, daß die Befehlseinrichtung (23, 29) bei ausgeführter Stapelregistrierung eine Änderung der Reihenfolge der Speicherungsprozeduren festlegt und die zweite Speichereinrichtung (51) die von der Eingabeeinrichtung (20, 28a) an die erste Speichereinrichtung (63) zur Speicherung in diesem optischen Speichermedium (19) gelieferten zu speichernden Daten gemäß der von der Befehlseinrichtung (23, 29) geänderten Speicherungsprozedur speichert.

6. Gerät nach einem der Ansprüche 1 bis 5, dadurch gekennzeichnet, daß die Eingabeeinrichtung (20, 28a) eine zweidimensionale Abtasteinheit (20) oder eine Diskette (28a) umfaßt.

7. Gerät nach einem der Ansprüche 1 bis 5, dadurch gekennzeichnet, daß das magnetische Speichermedium (28b) eine Diskette (28a) oder eine Magnetplatte (27a) umfaßt.

8. Gerät nach einem der Ansprüche 1 bis 5, dadurch gekennzeichnet, daß die Leseeinrichtung (52) ein Modul zur Interpretation der Datei mit den stapelweise zu verarbeitenden Registrierungsprozeduren (52) umfaßt.

9. Gerät nach einem der Ansprüche 1 bis 5, dadurch gekennzeichnet, daß die Befehlseinrichtung (23, 29) eine Tastatur (23) oder eine Maus (29) umfaßt.

10. Gerät nach einem der Ansprüche 1 bis 5, dadurch gekennzeichnet, daß die zweite Speichereinrichtung (51) ein Ablageverarbeitungsmodul (51) umfaßt.

## Revendications

1. Dispositif de stockage de données dans lequel une pluralité d'éléments de données de stockage sont stockés par lot dans un support de stockage optique (19), à raison d'un élément de données de stockage accompagné d'un titre et d'un mot clé, ledit dispositif comprenant un moyen d'alimentation (20, 28a) pour alimenter des données de stockage, un premier moyen de stockage (63) pour stocker des données de stockage appliquées depuis ledit moyen d'alimentation (20, 28a) dans ledit support de stockage optique (19) en relation avec un système de gestion constitué par une pluralité de structures hiérarchiques telles que des documents et que des pages pour gérer les données de stockage; et un moyen de désignation (23, 29),
caractérisé en ce que :
un moyen de lecture (52) lit sur un support de stockage magnétique (28b, 27a) des données représentant des procédures de stockage pour stocker les éléments de données de stockage dans ledit support de stockage optique (19) ;
ledit moyen de désignation (23, 29) désigne une procédure souhaitée parmi une pluralité de procédures de stockage, laquelle est destinée à être lue par ledit moyen de lecture (52) ; et
un second moyen de stockage (51) stocke les données de stockage en provenance dudit moyen d'alimentation (20, 28a) à l'aide dudit premier moyen de stockage (63) dans ledit support de stockage optique (19) en réponse à ladite procédure de stockage désignée par ledit moyen de désignation (23, 29).

2. Dispositif selon la revendication 1, caractérisé en ce que ledit moyen de désignation (23, 29) désigne une procédure souhaitée de traitement d'enregistrement pour un document selon des unités constituées par soit des pages, soit toutes les pages d'un document, soit toutes les pages d'une pluralité de documents.

3. Dispositif selon la revendication 1, caractérisé en ce que ledit moyen de désignation (23, 29) désigne une modification d'une procédure de stockage souhaitée, un moyen de modification (51) modifie la procédure de stockage stockée dans ledit support de stockage magnétique (28b, 27a) en réponse à un contenu de modification désigné par ledit moyen de désignation (23, 29) et ledit second moyen de stockage (51) stocke les données de stockage en provenance dudit moyen d'alimentation (20, 28a) à l'aide dudit premier moyen de stockage (63) dans ledit support de stockage optique (19) en relation avec la procédure de stockage modifiée par ledit moyen de modification (51).

4. Dispositif selon la revendication 1, caractérisé en ce que ledit moyen de désignation (23, 29) désigne un affichage de contenu enregistré pour un autre document ; une unité d'affichage (24) affiche des contenus enregistrés de chaque document, lequel doit être enregistré par lot ; et un moyen d'affichage (16) affiche les contenus enregistrés d'un autre document désigné par ledit moyen de désignation sur ladite unité d'affichage (24).

5. Dispositif selon la revendication 1, caractérisé en ce que ledit moyen de désignation (23, 29) désigne une modification de l'ordre de procédures de stockage lorsqu'un enregistrement par lot est réalisé et ledit second moyen de stockage (51) stocke les données de stockage appliquées depuis ledit moyen d'alimentation (20, 28a) à l'aide dudit premier moyen de stockage (63) dans ledit support de stockage optique (19) en relation avec la procédure de stockage modifiée par ledit moyen de désignation (23, 29).

6. Dispositif selon l'une quelconque des revendications 1 à 5, caractérisé en ce que ledit moyen d'alimentation (20, 28a) comprend une unité de balayage en deux dimensions (20) ou un disque souple (28a).

7. Dispositif selon l'une quelconque des revendications 1 à 5, caractérisé en ce que ledit support de stockage magnétique (28b) comprend un disque souple (28b) ou un disque magnétique (27a).

8. Dispositif selon l'une quelconque des revendications 1 à 5, caractérisé en ce que ledit moyen de lecture (52) comprend un module de traitement interprétatif de fichier de procédures d'enregistrement par lot (52).

9. Dispositif selon l'une quelconque des revendications 1 à 5, caractérisé en ce que ledit moyen de désignation (23, 29) comprend un clavier (23) ou une souris (29).

10. Dispositif selon l'une quelconque des revendications 1 à 5, caractérisé en ce que ledit second moyen de stockage (51) comprend un module de traitement de fichier (51).
